# EUROPEAN PATENT APPLICATION

(11) **EP 4 746 536 A1**
(43) Date of publication of application: **20.05.2026**
(21) Application number: 24855554.2
(22) Date of filing: 24.07.2024
(51) Int. Cl.: H04W 52/02

(54) **COMMUNICATION METHOD, COMMUNICATION DEVICE, AND COMMUNICATION SYSTEM**

(30) Priority: 18.08.2023 CN 202311052169
(71) Applicant: HUAWEI TECHNOLOGIES CO., LTD., Shenzhen 518129 (CN)
(72) Inventor: RUAN, Wei, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2024/107324
(87) International publication number: WO 2025/039828

(57) **Abstract**

A communication method, a communication apparatus, and a communication system are provided, and are applied to the field of communication technologies. The method includes: An AP generates a PPDU, where the PPDU includes a first field, and duration of the first field is determined by duration in which a first STA adjusts an operating mode OM parameter. The AP sends the PPDU, and correspondingly the first STA receives the PPDU, where the first field is carried on a first resource unit RU, and the first RU is included in an RU corresponding to the first STA. The first STA adjusts the OM parameter based on the PPDU. According to embodiments of this application, air interface and time overheads can be reduced, thereby reducing signaling overheads.

## Description

This application claims priority to Chinese Patent Application No. 202311052169.7, filed with the China National Intellectual Property Administration on August 18, 2023, and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In the 802.11 protocol, an operating mode (operating mode, OM) of a station (station, which is a station STA for short below) of a non-access point (non-access point, non-AP) may include an energy saving mode (or referred to as a low power mode) and a non-energy saving mode (or referred to as a high power mode). When there is no data transmission, a STA in an energy saving mode performs monitoring, to reduce energy consumption of the STA. The STA switches to a non-energy saving mode before receiving data, to better receive the data. For example, the STA may switch between the energy saving mode and the non-energy saving mode by switching between a high-capability receiver and a low-capability receiver or adjusting an OM parameter, to implement an energy saving solution of the STA.

An access point (access point, AP) may indicate, by using a request to send (request to send, RTS) frame or a trigger (Trigger) frame, the STA to perform OM switching. After receiving an RTS frame or a trigger frame that carries an OM parameter corresponding to a high power mode, the STA may switch to the high power mode or wake up the high-capability receiver.

However, in the foregoing method, air interface and time overheads are introduced by interaction between the AP and the STA, and the RTS frame or the trigger frame and a physical (physical, PHY) protocol data unit (PHY protocol data unit, PPDU) frame include repetitive parameters. As a result, a waste of resources is caused.

### SUMMARY

Embodiments of this application disclose a communication method, a communication apparatus, and a communication system, so that air interface and time overheads can be reduced, thereby reducing signaling overheads.

According to a first aspect, an embodiment of this application provides a communication method. The method is applied to an AP or a chip, and the chip is disposed in the AP. The method includes:
generating a PPDU, where the PPDU includes a first field, and duration of the first field is determined by using duration in which a first STA adjusts an operating mode (operating mode, OM) parameter; and sending the PPDU, where the first field is carried on a first resource unit (resource units, RU), and the first RU is included in an RU corresponding to the first STA.

In this embodiment of this application, the RU corresponding to the first STA is an RU that is allocated by the AP to the first STA and that is used to transmit data of the first STA. The first RU is all or a part of the RU corresponding to the first STA, that is, an RU for transmitting the first field is all or the part of the RU corresponding to the first STA. The first STAhas an energy saving capability, to be specific, the operating mode of the first STA may include an energy saving mode and a non-energy saving mode. For example, the first STA may implement switching between the energy saving mode and the non-energy saving mode by adjusting the OM parameter. The PPDU may provide, by using the first field, time for adjusting the OM parameter for the first STA, and the duration of the first field is determined by duration in which the first STA adjusts the OM parameter, so that the first STA can adjust the OM parameter in the duration of the first field, and the AP and the first STA do not need to exchange an RTS frame or a trigger frame. This can reduce air interface and time overheads, and do not repeatedly transmit the parameter, thereby reducing signaling overheads and avoiding a waste of resources.

According to a second aspect, an embodiment of this application provides a communication method. The method is applied to a first STA or a chip, and the chip is disposed in the first STA. The method includes:
receiving a PPDU, where the PPDU includes a first field, duration of the first field is determined by duration in which the first STA adjusts an operating mode OM parameter, the first field is carried on a first resource unit RU, and the first RU is included in an RU corresponding to the first STA; and adjusting the OM parameter based on the PPDU.

With reference to the first aspect or the second aspect, in a possible implementation, the PPDU includes data of a plurality of STAs. For example, the PPDU includes a multi-user PPDU (multi-user PPDU, MU PPDU), the first RU is the RU corresponding to the first STA, that is, the first field is transmitted by the RU corresponding to the first STA, and the first field is used to provide time for adjusting the OM parameter for the first STA.

With reference to the first aspect or the second aspect, in a possible implementation, the PPDU is used to transmit data of the first STA. For example, the PPDU includes a single-user PPDU (single-user PPDU, SU PPDU). The first RU is an RU, whose OM parameter needs to be adjusted, in a plurality of RUs corresponding to the first STA. When the first STA receives the PPDU, different OM parameters may be used in different RUs, and the first field is used to provide the time in which the first STA adjusts the OM parameter corresponding to the first RU. The duration of the first field may be determined based on the duration in which the first STA adjusts the OM parameter corresponding to the first RU.

With reference to the first aspect or the second aspect, in a possible implementation, the PPDU further includes a first signaling SIG field and a first data field, the first field is located between the first SIG field and the first data field, and the first data field is carried on the first RU.

In this embodiment of this application, the first SIG field is used to configure the first field, and the first data field is used to transmit data of the first STA. The first field is set between the first SIG field and the first data field, so that the first STA can adjust the OM parameter in the duration of the first field, and receive the data in the first data field based on the adjusted OM parameter, to ensure reliability of the data received by the first STA.

With reference to the first aspect or the second aspect, in a possible implementation, the PPDU further includes a second field, the second field is located after the first field, and the second field includes a short training field.

In this embodiment of this application, the short training field has a short period, and the second field is used by the first STA to adjust automatic gain control (automatic gain control, AGC) after adjusting the OM parameter, so that the first STA can better receive the data.

With reference to the first aspect or the second aspect, in a possible implementation, the second field is transmitted by an RU corresponding to at least one STA, and the at least one STA includes the first STA.

In this embodiment of this application, the at least one STA is a part or all of the plurality of STAs that transmit the data in the PPDU. For example, the second field may be used by an AP to determine a transmission bandwidth, and the transmission bandwidth includes the RU corresponding to the first STA. That is, the second field may be transmitted on all or a part of the transmission bandwidth of the PPDU. For example, the at least one STA includes one STA, that is, the second field is transmitted by the RU corresponding to the first STA. This can avoid impact of the second field on data transmitted by another STA, and reduce transmission resource overheads of the another STA. For another example, the at least one STA includes all of the plurality of STAs, that is, the second field is transmitted on all of the transmission bandwidth of the PPDU, so that a short period of the short training field can be prevented from being affected by data of another STA, and reliability of adjusting the AGC by the first STA can be ensured.

With reference to the first aspect or the second aspect, in a possible implementation, the PPDU further includes a third field, the third field is located after the first field, and the third field is used by the first STA to perform channel estimation after adjusting the OM parameter.

In this embodiment of this application, the third field may include a long training field, and the third field is after the first field, so that after adjusting the OM parameter in the duration of the first field, the first STA can perform channel estimation based on the third field, to ensure reliability of the data received by the first STA.

With reference to the first aspect or the second aspect, in a possible implementation, the third field is transmitted by the RU corresponding to the at least one STA, and the at least one STA includes the first STA.

In this embodiment of this application, the at least one STA is a part or all of the plurality of STAs that transmit the data in the PPDU. For example, the third field may be used by the AP to determine a transmission bandwidth, and the transmission bandwidth includes the RU corresponding to the first STA. That is, the third field may be transmitted on all or a part of the transmission bandwidth of the PPDU. For example, the at least one STA includes one STA, that is, the third field is transmitted by the RU corresponding to the first STA. This can avoid impact of the third field on data transmitted by another STA, and reduce transmission resource overheads of the another STA. For another example, the at least one STA includes all of the plurality of STAs, that is, the third field is transmitted on all of the transmission bandwidth of the PPDU, so that a period of the long training field of the third field can be prevented from being affected by data of another STA, and reliability of performing channel estimation by the first STA can be ensured.

With reference to the first aspect or the second aspect, in a possible implementation, the first field is carried on the RU corresponding to the first STA and an RU corresponding to a second STA, and the duration of the first field is determined by the duration in which the first STA adjusts the OM parameter and duration in which the second STA adjusts the OM parameter.

In this embodiment of this application, the first field is used to provide time in which the first STA adjusts the OM parameter and time in which the second STA adjusts the OM parameter. The duration of the first field is determined by the duration in which the first STA adjusts the OM parameter and the duration in which the second STA adjusts the OM parameter. For example, the duration of the first field is greater than or equal to maximum duration in which the first STA and the second STA adjust the OM parameter, so that the first STA and the second STA can adjust the OM parameter in the duration of the first field.

With reference to the first aspect or the second aspect, in a possible implementation, the PPDU further includes a fourth field, duration of the fourth field is determined by the duration of the first field and the duration in which the second STA adjusts the OM parameter, the fourth field is located after the first field, and the fourth field is carried on the RU corresponding to the second STA.

In this embodiment of this application, when a difference between the duration in which the first STA adjusts the OM parameter and the duration in which the second STA adjusts the OM parameter is greater than a second threshold, the PPDU further includes the fourth field, and the PPDU may provide, by using the first field, time for adjusting the OM parameter for the first STA, and provide, by using the first field and the fourth field, time for adjusting the OM parameter for the second STA. The first STA adjusts the OM parameter in the duration of the first field, and the second STA adjusts the OM parameter in the duration of the first field and the duration of the fourth field, so that impact of the duration in which the second STA adjusts the OM parameter on data transmission of the first STA can be small.

With reference to the first aspect or the second aspect, in a possible implementation, the PPDU further includes a fifth field and/or a sixth field, the fifth field or the sixth field is after the fourth field, the fifth field includes a short training field, and the sixth field includes a long training field.

In this embodiment of this application, the fifth field is used by the second STA to adjust the AGC after adjusting the OM parameter, and the sixth field is used by the second STA to perform channel estimation after adjusting the OM parameter, so that the second STA can better receive and demodulate data after adjusting the OM parameter.

With reference to the first aspect or the second aspect, in a possible implementation, the first SIG field includes at least one of the following: a start location of the first field, a start location of the second field, a start location of the third field, a length of the first field, a length of the second field, and a length of the third field.

In this embodiment of this application, indication information, for example, the start location of the first field, the start location of the second field, the start location of the third field, the length of the first field, the length of the second field, and the length of the third field may be included in a common field or a user field of the first SIG field. The first SIG field includes at least one of the start location of the first field, the start location of the second field, the start location of the third field, the length of the first field, the length of the second field, and the length of the third field, so that the first STA can determine the location and the length of the first field, the second field, or the third field based on the indication information.

With reference to the first aspect or the second aspect, in a possible implementation, the first field is used to carry data of another STA that is not the first STA.

In this embodiment of this application, the first field may carry data of the another STA that is not the first STA, so that the first field can be fully used, thereby avoiding a waste of resources.

With reference to the first aspect or the second aspect, in a possible implementation, the first SIG field carries third indication information, and the third indication information indicates that the first field carries data of a third STA.

In this embodiment of this application, the third STA is a STA that does not need to adjust the OM parameter and that is in the plurality of STAs that transmit data in the PPDU. For example, the third STA may include a STA in a non-energy saving mode. The first field carries the data of the third STA, and the third indication information can indicate the third STA to receive the data in the RU corresponding to the first STA in the duration of the first field.

With reference to the first aspect or the second aspect, in a possible implementation, the first SIG field includes the first user field, the first user field carries the third indication information and identification information of the third STA, and the RU corresponding to the first user field is included in the RU corresponding to the first STA.

In this embodiment of this application, the RU corresponding to the first user field may be all or the part of the RU corresponding to the first STA. That is, in the duration of the first field, the data of the third STA may be transmitted on all or the part of the RU corresponding to the first STA. The third STA may determine, by detecting the first user field in the first SIG field, that the first field carries the data of the third STA.

With reference to the first aspect or the second aspect, in a possible implementation, a difference between center frequencies of the RU corresponding to the third STA and the RU corresponding to the first STA is less than a first threshold.

In this embodiment of this application, the RU corresponding to the third STA is adjacent to the RU corresponding to the first STA, and the first threshold may be determined based on bandwidth ranges of the RU corresponding to the first STA and the RU corresponding to the third STA. The third STA needs to detect only a user field adjacent to a user field corresponding to the third STA, to determine whether the first field carries the data of the third STA, and does not need to detect all user fields in the first SIG field, so that a waste of resources of the third STA can be reduced.

With reference to the first aspect or the second aspect, in a possible implementation, the first field is used to carry first data of the first STA, and an OM parameter corresponding to the first data carried in the first field includes the OM parameter before being adjusted by the first STA.

In this embodiment of this application, the OM parameter corresponding to the first data is an OM parameter used when the first STA receives the first data, the first field carries the first data of the first STA, and the first STA can receive the first data by using the OM parameter before being adjusted, so that a resource can be appropriately used, and a waste of resources can be avoided.

With reference to the first aspect or the second aspect, in a possible implementation, the first data field in the PPDU is used to carry the first data, the first data field is located after the first field, and the OM parameter corresponding to the first data carried in the first data field includes the OM parameter after being adjusted by the first STA.

In this embodiment of this application, after completing adjustment of the OM parameter, the first STA repeatedly transmits the first data carried in the first field, so that the first STA can perform demodulation based on data that is received twice, data reliability is improved, and a longer transmission distance can be supported.

With reference to the first aspect or the second aspect, in a possible implementation, the first field includes at least one of the following: a random sequence, a legacy-short training field (legacy-short training field, L-STF), a legacy-long training field (legacy-long training field, L-LTF), an ultra high reliability short training field (ultra high reliability short training field, UHR-STF), or an ultra high reliability long training field (ultra high reliability long training field, UHR-LTF).

In this embodiment of this application, the first field may carry a long training field or a short training field, so that when the first STA completes adjustment of the OM parameter before an end moment of the first field, the first STA can adjust AGC or perform channel estimation based on the long training field or the short training field.

With reference to the first aspect or the second aspect, in a possible implementation, the PPDU further includes first indication information, and the first indication information indicates the first STA to adjust the OM parameter.

With reference to the first aspect or the second aspect, in a possible implementation, the method further includes:
receiving a block acknowledgment (block acknowledgment, BA) frame, where the BA frame includes second indication information, and the second indication information indicates the duration in which the first STA adjusts the OM parameter.

In this embodiment of this application, the second indication information indicates duration in which the first STA previously adjusts the OM parameter, or the second indication information indicates maximum duration in which the first STA adjusts the OM parameter. The maximum duration in which the first STA adjusts the OM parameter may be determined by a capability of the first STA, or may be determined by duration in which the first STA historically adjusts the OM parameter. After receiving the PPDU, the first STA may return the BA frame to the AP, and include, in the BA frame, indication information of the duration for adjusting the OM parameter, so that the AP can adjust the duration of the first field based on the second indication information.

With reference to the first aspect or the second aspect, in a possible implementation, the OM parameter includes at least one of the following: a modulation and coding scheme MCS, a number of spatial streams NSS, a bandwidth, a transmit power, and a receive frequency.

With reference to the second aspect, in a possible implementation, adjusting the OM parameter based on the PPDU includes:
when the first SIG field in the PPDU includes a user field corresponding to the first STA, or an OM parameter indicated by the PPDU is different from a current OM parameter of the first STA, or OM parameter adjustment indication information is received, adjusting the OM parameter based on the PPDU.

With reference to the second aspect, in a possible implementation, a start moment at which the first STA adjusts the OM parameter includes any one of the following: a moment at which the first STA detects that the first signaling SIG field includes the user field corresponding to the first STA, a moment at which the first STA completes detection of the first signaling SIG field, or a start moment of the first field.

According to a third aspect, an embodiment of this application provides a communication apparatus, configured to perform the method according to any one of the first aspect or the possible implementations of the first aspect. The communication apparatus includes units configured to perform the method according to any one of the first aspect or the possible implementations of the first aspect.

According to a fourth aspect, an embodiment of this application provides a communication apparatus, configured to perform the method according to any one of the second aspect or the possible implementations of the second aspect. The communication apparatus includes units configured to perform the method according to any one of the second aspect or the possible implementations of the second aspect.

In the third aspect and the fourth aspect, the communication apparatus may include a transceiver unit and a processing unit. For detailed descriptions of the transceiver unit and the processing unit, refer to apparatus embodiments provided below.

According to a fifth aspect, an embodiment of this application provides a communication apparatus. The communication apparatus includes a processor, configured to perform the method according to any one of the first aspect and the second aspect or the possible implementations of the first aspect and the second aspect. Alternatively, the processor is configured to execute a program stored in a memory; and when the program is executed, the method according to any one of the first aspect and the second aspect or the possible implementations of the first aspect and the second aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal or send a signal.

According to the sixth aspect, an embodiment of this application provides a communication apparatus. The communication apparatus includes a logic circuit and an interface, and the logic circuit is coupled to the interface. The logic circuit is configured to generate a PPDU. The interface is configured to output the PPDU.

It may be understood that for the communication apparatus according to the sixth aspect, refer to the first aspect or the following specific implementations.

According to a seventh aspect, an embodiment of this application provides a communication apparatus. The communication apparatus includes a logic circuit and an interface. The logic circuit is coupled to the interface. The interface is configured to input a PPDU. The logic circuit is configured to adjust an OM parameter based on the PPDU.

It may be understood that for the communication apparatus according to the seventh aspect, refer to the second aspect or the following specific implementations.

According to an eighth aspect, an embodiment of this application provides a computer-readable storage medium. The computer-readable storage medium is configured to store a computer program. When the computer program runs on a computer, the method according to any one of the first aspect and the second aspect or the possible implementations of the first aspect and the second aspect is performed.

According to a ninth aspect, an embodiment of this application provides a computer program product. The computer program product includes a computer program. When the computer program runs on a computer, the method according to any one of the first aspect and the second aspect or the possible implementations of the first aspect and the second aspect is performed.

According to a tenth aspect, an embodiment of this application provides a computer program. When the computer program runs on a computer, the method according to any one of the first aspect and the second aspect or the possible implementations of the first aspect and the second aspect is performed.

According to an eleventh aspect, an embodiment of this application provides a communication system. The communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

### BRIEF DESCRIPTION OF DRAWINGS

The following describes accompanying drawings in embodiments of this application.
FIG. 1 is a diagram of a structure of a communication system according to an embodiment of this application;
FIG. 2 is a diagram of a structure of an AP and a STA according to an embodiment of this application;
FIG. 3 is a flowchart of interaction between an AP and a STA according to an embodiment of this application;
FIG. 4 is a schematic flowchart of a communication method according to an embodiment of this application;
FIG. 5A and FIG. 5B are diagrams of structures of a PPDU according to an embodiment of this application;
FIG. 6 is a diagram of a structure of another PPDU according to an embodiment of this application;
FIG. 7 is a diagram of a structure of still another PPDU according to an embodiment of this application;
FIG. 8 is a diagram of a structure of still another PPDU according to an embodiment of this application;
FIG. 9 is a diagram of a structure of still another PPDU according to an embodiment of this application;
FIG. 10 is a diagram of a structure of still another PPDU according to an embodiment of this application;
FIG. 11A and FIG. 11B are diagrams of structures of another PPDU according to an embodiment of this application;
FIG. 12 is a diagram of a structure of still another PPDU according to an embodiment of this application;
FIG. 13 is a diagram of a structure of a first SIG field according to an embodiment of this application;
FIG. 14 is a diagram of a structure of still another PPDU according to an embodiment of this application;
FIG. 15A and FIG. 15B are diagrams of structures of a user field according to an embodiment of this application;
FIG. 16A and FIG. 16B are diagrams of structures of a user field according to an embodiment of this application;
FIG. 17A and FIG. 17B are diagrams of structures of a user field according to an embodiment of this application;
FIG. 18 is a diagram of a structure of a communication apparatus according to an embodiment of this application;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms "include", "have", and any other variations thereof are intended to cover non-exclusive inclusion. For example, processes, methods, systems, products, devices, and the like that include a series of steps or units are not limited to the listed steps or units, but optionally further include unlisted steps, units, or the like, or optionally further include other steps or units inherent to these processes, methods, products, devices, and the like.

An "embodiment" mentioned in this specification means that a particular feature, structure, or characteristic described with reference to embodiments may be included in at least one embodiment of this application. The phrase shown in various locations in this specification may not necessarily be a same embodiment, and is not an independent or optional embodiment exclusive from another embodiment. It may be explicitly and implicitly understood by a person skilled in the art that, in embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

The technical solutions provided in embodiments of this application may be applied to a WLAN system, for example, Wi-Fi. For example, methods provided in embodiments of this application are applicable to the IEEE 802.11 series protocols, for example, the 802.11a/b/g protocol, the 802.11n protocol, the 802.11ac protocol, the 802.11ax protocol, the 802.11be protocol, Wi-Fi 7, the EHT protocol, or a next-generation protocol, for example, a wireless local area network system of the 802.11 series protocols such as Wi-Fi 8, UHR, and Wi-Fi AI. The technical solutions provided in embodiments of this application may be further applied to a wireless personal area network (wireless personal area network, WPAN) based on a UWB technology, a sensing (sensing) system, and the like. For example, the methods provided in embodiments of this application are further applicable to the IEEE 802.15 series protocols such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems, for example, an internet of things (internet of things, IoT) system, a vehicle to everything (vehicle to X, V2X) system, and a narrowband internet of things (narrowband internet of things, NB-IoT) system, may be applied to a device in the internet of vehicles, an internet of things node, a sensor, and the like in the internet of things (IoT, internet of things), a smart camera, a smart remote control, and a smart water/electricity meter in a smart home, a sensor in a smart city, and the like, or may be further applied to a long term evolution (long term evolution, LTE) system, a 5th-generation (5th-generation, 5G) communication system, a new communication system emerging in future communication development, and the like.

The WLAN system may provide high-speed and low-latency transmission. With continuous evolution of WLAN application scenarios, the WLAN system is to be applied to more scenarios or industries, for example, the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a sound system) in a smart office, an internet of vehicles device in the internet of vehicles, an infrastructure (for example, a vending machine, a self-service navigation console in a shopping mall or a supermarket, a self-service cashier, or a self-service ordering machine) in a daily life scenario, a device in a large-scale stadium, a music venue, or the like. For example, the access point and the station each may be a device used in the internet of vehicles, an internet of things node, a sensor, or the like in the internet of things, a smart camera, a smart remote control, and a smart water/electricity meter in a smart home, a sensor in a smart city, or the like.

Although embodiments of this application mainly use a WLAN as an example, especially a network applied to the IEEE 802.11 series standards, for example, a system supporting Wi-Fi 7 that may also be referred to as extremely high throughput (extremely high throughput, EHT) or a system supporting Wi-Fi 8 that may also be referred to as ultra high reliability (ultra high reliability, UHR) or ultra high reliability and throughput (ultra high reliability and throughput, UHRT). However, a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard), a wide area network (WAN), or another network that is currently known or developed in the future.

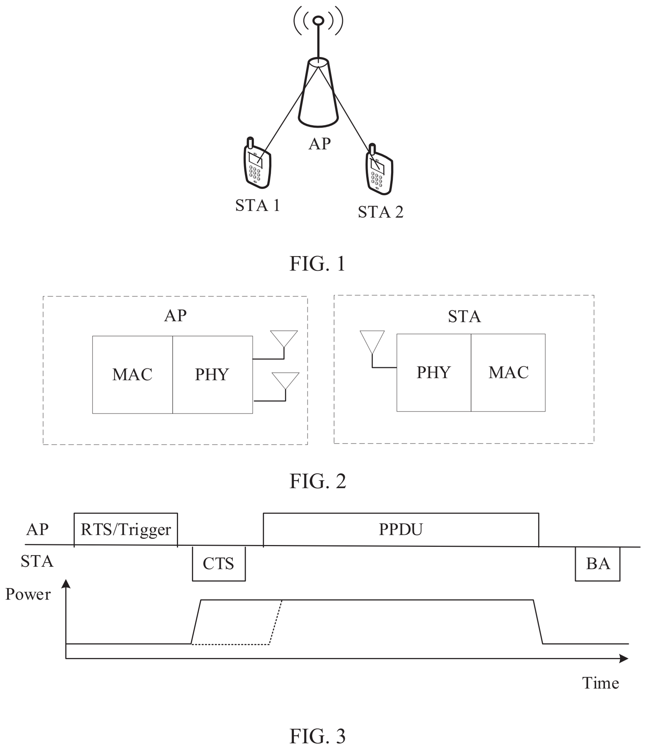

The method provided in this application may be implemented by a communication apparatus in a wireless communication system. For example, the communication apparatus may be an access point (access point, AP) or a station (station, STA). For example, FIG. 1 is a diagram of an architecture of a communication system according to an embodiment of this application. The communication system includes at least one AP and at least one STA. FIG. 1 shows only one AP and two STAs (a STA 1 and a STA 2) as an example.

The AP is an apparatus having a wireless communication function, supports communication or sensing by using a WLAN protocol, has a function of communicating with or sensing another device (for example, a station or another access point) in a WLAN network, and certainly may also have a function of communicating with or sensing another device. Alternatively, the access point is equivalent to a bridge that connects a wired network and a wireless network. A main function of the access point is to connect various wireless network clients together and then connect the wireless network to an ethernet. In a WLAN system, the access point may be referred to as an access point station (AP STA). The apparatus having a wireless communication function may be an entire device, or may be a chip or a processing system installed in an entire device. The device in which the chip or the processing system is installed may implement a method and a function in embodiments of this application under control of the chip or the processing system. The AP in embodiments of this application is an apparatus that provides a service for the STA, and may support the 802.11 series protocols. For example, the access point may be an access point for a terminal (for example, a mobile phone) to access a wired (or wireless) network, and is mainly deployed at home, inside a building, and inside a campus. A typical coverage radius is tens of meters to 100-odd meters. Certainly, the access point may alternatively be deployed outdoors. For another example, the AP may be a communication entity, for example, a communication server, a router, a switch, or a bridge; or the AP may include various forms of macro base stations, micro base stations, relay stations, and the like. It is clear that the AP may alternatively be a chip and a processing system in these devices in various forms, to implement the method and function in embodiments of this application. The access point in this application may be a high-efficiency (high-efficiency, HE) AP, an extremely high throughput (extremely high throughput, EHT) AP, or an access point applicable to a future Wi-Fi standard.

The STA is an apparatus having a wireless communication function, supports communication or sensing by using the WLAN protocol, and has a capability of communicating with or sensing another station or access point in a WLAN network. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, or the like installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, and the like.

For example, FIG. 2 is a diagram of a structure of an AP and a STA according to an embodiment of this application. The AP may be a multi-antenna AP or may be a single-antenna AP. As shown in FIG. 2, the AP includes a physical layer (physical layer, PHY) processing circuit and a medium access control (medium access control, MAC) processing circuit. The physical layer processing circuit may be configured to process a physical layer signal, and the MAC layer processing circuit may be configured to process a MAC layer signal. The 802.11 standard focuses on PHY and MAC parts. As shown in FIG. 2, FIG. 2 further shows a diagram of a structure of a STA having a single antenna. In an actual scenario, the STA may alternatively have a plurality of antennas, and may be a device having more than two antennas. The STA may include a PHY processing circuit and a MAC processing circuit. The physical layer processing circuit may be configured to process a physical layer signal, and the MAC layer processing circuit may be configured to process a MAC layer signal.

In some possible implementations, an operating mode (operating mode, OM) of a STA may include an energy saving mode (or referred to as a low power mode) and a non-energy saving mode (or referred to as a high power mode). When there is no data transmission, a STA in an energy saving mode performs monitoring, to reduce energy consumption of the STA. The STA switches to a non-energy saving mode before receiving data, to better receive the data. For example, the STA may switch between the energy saving mode and the non-energy saving mode by switching between a high-capability receiver and a low-capability receiver or adjusting an OM parameter, to implement an energy saving solution of the STA.

For example, the AP may indicate, by using a request to send (request to send, RTS) frame or a trigger (Trigger) frame, the STA to perform OM switching. After receiving an RTS frame or a trigger frame that carries an OM parameter corresponding to a high power mode, the STA may switch to the high power mode or wake up the high-capability receiver. As shown in FIG. 3, after the AP sends the RTS frame or the trigger frame, the STA returns a clear to send (clear to send, CTS) frame to the AP. The STA may switch to the high power mode before sending the CTS frame, or may switch to the high power mode after sending the CTS frame. The STA receives, based on the high power mode, a PPDU sent by the AP. For example, the PPDU includes a pre-EHT field and an EHT modulation field. After receiving the PPDU, the STA may further return a BA frame to the AP.

However, in this manner, air interface and time overheads are introduced by interaction between the AP and the STA, and the RTS frame or the trigger frame and a PPDU frame include a repetition parameter. As a result, a waste of resources is caused.

In view of this, embodiments of this application provide a communication method, so that air interface and time overheads can be avoided, thereby reducing signaling overheads. The method is applied to the communication system shown in FIG. 1. The method provided in embodiments of this application may be applied to a first communication apparatus and a second communication apparatus. The first communication apparatus may be an AP or a STA, and the second communication apparatus may be an AP or a STA. For ease of description, the following describes the method provided in embodiments of this application by using an example in which the first communication apparatus is an AP and the second communication apparatus is a STA.

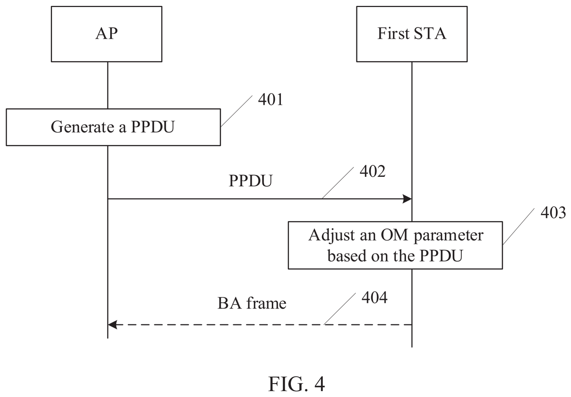

FIG. 4 is a schematic flowchart of a communication method according to an embodiment of this application. The method includes but is not limited to the following steps.

401: An AP generates a PPDU, where the PPDU includes a first field, and duration of the first field is determined by duration in which a first STA adjusts an OM parameter.

For example, the first STA has an energy saving capability, to be specific, an operating mode of the first STA may include an energy saving mode and a non-energy saving mode. For example, the first STA may implement switching between the energy saving mode and the non-energy saving mode by adjusting the OM parameter. The first field is used to provide time in which the first STA adjusts the OM parameter, and the AP may determine the duration of the first field based on the duration in which the first STA adjusts the OM parameter, so that the first STA can adjust the OM parameter in the duration of the first field. For example, the duration of the first field is greater than or equal to the duration in which the first STA adjusts the OM parameter.

For example, the PPDU may further include an adjusted OM parameter of the first STA.

In a possible implementation, the PPDU further includes a first signaling (signal, SIG) field and a first data field, the first field is located between the first SIG field and the first data field, and the first data field is carried on the first RU.

For example, the first SIG field includes signaling indication information of the first field. For example, the first SIG includes location information and length information of the first field. The first SIG field may include at least one of a universal signaling field (universal signaling field, U-SIG) and UHR-SIG. The first data field is used to transmit data of the first STA, and the first data field is transmitted on a first RU. After adjusting the OM parameter in the duration of the first field, the first STA may receive, based on the adjusted OM parameter, the data carried in the first data field.

In this implementation, the first field is set between the first SIG field and the first data field, so that the first STA can adjust the OM parameter in the duration of the first field, and receive the data in the first data field based on the adjusted OM parameter, to ensure reliability of the data received by the first STA.

In a possible implementation, the PPDU further includes first indication information, and the first indication information indicates the first STA to adjust the OM parameter. For example, the first indication information may be included in a common field or a user field of the first SIG field in the PPDU. For example, the PPDU may indicate, by using one bit in a user field corresponding to the first STA, whether the first STA adjusts the OM parameter.

In a possible implementation, the PPDU further includes a second field, the second field is located after the first field, and the second field includes a short training field (short training field, STF). The short training field has a short period, and the second field is used by the first STA to perform automatic gain control (automatic gain control, AGC) after adjusting the OM parameter, so that the first STA can better receive the data.

For example, the STF may be protocol-specified or specified through negotiation between the AP and the first STA, and the first STA can adjust the AGC based on the STF. For example, the STF may include a repeat UHR-STF (repeat UHR-STF, R-UHR-STF).

For example, the second field may be transmitted by an RU corresponding to at least one STA, and the at least one STA includes the first STA. The at least one STA is all or a part of a plurality of STAs that transmit data in the PPDU, that is, the PPDU transmits data of any STA in the at least one STA. That is, a bandwidth range corresponding to the second field includes a bandwidth range of the RU corresponding to the at least one STA.

For example, the second field may be used by the AP to determine a transmission bandwidth, and the transmission bandwidth includes an RU corresponding to the first STA. The second field may be transmitted on all or a part of the transmission bandwidth of the PPDU. For example, the at least one STA includes one STA, that is, the second field is transmitted by the RU corresponding to the first STA. This can avoid impact of the second field on data transmitted by another STA, and reduce transmission resource overheads of the another STA. For another example, the at least one STA includes all of the plurality of STAs, that is, the second field is transmitted on all of the transmission bandwidth of the PPDU, so that a short period of the short training field can be prevented from being affected by data of another STA, and reliability of adjusting the AGC by the first STA can be ensured.

In a possible implementation, the PPDU further includes a third field, the third field is located after the first field, and the third field is used by the first STA to perform channel estimation after adjusting the OM parameter.

For example, the third field may be transmitted by the RU corresponding to the at least one STA, and the at least one STA includes the first STA. The at least one STA is at least one STA in a plurality of STAs corresponding to the PPDU, that is, the PPDU transmits data of any STA in the at least one STA. That is, a bandwidth range corresponding to the third field includes a bandwidth range of the RU corresponding to the at least one STA.

For example, the third field may carry a first sequence, the first sequence is protocol-specified or specified through negotiation between the AP and the first STA, and the first STA can perform channel estimation based on the first sequence. For example, the third field includes a long training field (long training field, LTF).

For example, the OM parameter includes at least one of the following: a modulation and coding scheme (modulation and coding scheme, MCS), a number of spatial streams (number of spatial streams, NSS), a bandwidth, a transmit power, and a receive frequency.

For example, when the first STA needs to adjust only the MCS, the PPDU may not include the second field and the third field. When the first STA needs to adjust the NSS and the bandwidth, the PPDU includes the second field and the third field.

In a possible implementation, the first SIG field in the PPDU includes at least one of the following: a start location of the first field, a start location of the third field, a start location of the second field, a length of the first field, a length of the third field, and a length of the second field. In this implementation, the start location of the first field, the start location of the third field, the start location of the second field, the length of the first field, the length of the third field, and the length of the second field may be flexibly configured by using the SIG field.

For example, the start location of the first field may indicate an offset of a start moment of the first field relative to a start moment of another field in the PPDU or a number of symbols corresponding to the start moment of the first field. It may be understood that when a relative location of the first field in the PPDU is fixed, the first SIG field may not include the start location of the first field. For example, if it is protocol-specified or the AP configures that the first field is located after the UHR-STF in the PPDU, the first SIG field may not include the start location of the first field.

For example, the length of the first field may indicate the duration of the first field, a number of occupied symbols, or a number of occupied bits, the length of the third field may indicate duration of the third field, a number of occupied symbols, a number of occupied bits, or a number of LTFs in the third field, and the length of the second field may indicate duration of the second field, a number of occupied symbols, a number of occupied bits, or a number of STFs in the second field. It may be understood that when the length of the first field, the third field, or the second field is protocol-specified or specified through negotiation between the AP and the STA, the PPDU may not include the length of the first field, the third field, or the second field.

For example, the start location of the first field, the start location of the third field, the start location of the second field, the length of the first field, the length of the third field, and the length of the second field may be included in the common field of the first SIG field, or may be included in the user field (user field) of the first SIG field. For example, the start location of the first field, the start location of the third field, the start location of the second field, the length of the first field, the length of the third field, and the length of the second field may be included in the user field corresponding to the first STA.

In an example, the PPDU includes the start location of the first field, the length of the first field, the length of the third field, and the length of the second field. In this example, the second field is located after the first field, and the third field is located after the second field. The start location of the second field may be determined by the start location of the first field and the length of the first field. The start location of the third field may be determined based on the start location of the second field and the length of the second field. It may be understood that when the length of the third field and the length of the second field are protocol-specified, or are specified through negotiation between the AP and the STA, or are determined by a length of the UHR-LTF and a length of the UHR-STF in the PPDU, the PPDU may not include the length of the third field and the length of the second field. That is, in this case, the PPUD includes the start location of the first field and the length of the first field.

In another example, the first SIG field in the PPDU may include a mode of the second field, different modes of the second field may correspond to different start locations and/or lengths of the second field, and the length of the first field is determined by the duration in which the first STA adjusts the OM parameter and the start location of the second field. In this implementation, the PPDU can determine the length of the first field only by indicating the mode of the second field in the first SIG.

In still another example, the second field is transmitted on RUs corresponding to the plurality of STAs, the common field of the first SIG field includes the start location and the length of the second field, the user field corresponding to the first STA includes the length of the first field and the length of the third field, and the first STA can determine the start location of the first field based on the start location of the second field and the length of the first field.

402: The AP sends the PPDU, and correspondingly the first STA receives the PPDU, where the first field is carried on a first RU, and the first RU is included in the RU corresponding to the first STA.

The RU corresponding to the first STA is an RU that is allocated by the AP to the first STA and that is used to transmit the data of the first STA. The first RU is all or a part of the RU corresponding to the first STA. For example, the first STA may correspond to a plurality of RUs, and the first RU is one of the plurality of RUs. That is, the RU for transmitting the first field is all or the part of the RU corresponding to the first STA.

For example, before completing adjustment of the OM parameter, the first STA receives the PPDU by using the OM parameter before being adjusted. After completing adjustment of the OM parameter, the first STA receives the PPDU by using the adjusted OM parameter. For example, before completing adjustment of the OM parameter, the first STA receives the PPDU by using a low-capability receiver or a low power mode. After completing adjustment of the OM parameter, the first STA receives a remaining PPDU by using a high-capability receiver or a high power mode.

403: The first STA adjusts the OM parameter based on the PPDU.

For example, after receiving the PPDU, the first STA adjusts the OM parameter based on the PPDU. For example, when any one of the following conditions is met, the first STA adjusts the OM parameter based on the PPDU: the first SIG field in the PPDU includes the user field corresponding to the first STA, the OM parameter indicated by the PPDU is different from a current OM parameter of the first STA, and OM parameter adjustment indication information is received. That is, when the first SIG field in the PPDU includes the user field corresponding to the first STA, or the OM parameter indicated by the PPDU is different from the current OM parameter of the first STA, or the OM parameter adjustment indication information is received, the first STA adjusts the OM parameter based on the PPDU. The user field corresponding to the first STA includes an association identifier (association identifier, AID) matching a first STA-identifier (STA-identifier, STA-ID).

In a possible implementation, a start moment at which the first STA adjusts the OM parameter includes any one of the following: a moment at which the first STA completes detection of the user field that corresponds to the first STA and that is included in the first signaling SIG field, a moment at which the first STA completes detection of the first signaling SIG field, and the start moment of the first field. The first STA starts to adjust the OM parameter at the moment at which the first signaling SIG field includes the user field corresponding to the first STA, so that adjustment of the OM parameter can be completed more quickly, and the duration of the first field can be shortened.

In this embodiment of this application, the PPDU may provide, by using the first field, time for adjusting the OM parameter for the first STA, and the duration of the first field is determined by the duration in which the first STA adjusts the OM parameter, so that when receiving the PPDU, the first STA can adjust the OM parameter in the duration of the first field, and does not need to exchange the RTS frame or the trigger frame with the AP. This can reduce air interface and time overheads, and do not repeatedly transmit the parameter, thereby reducing signaling overheads and avoiding a waste of resources.

In a possible implementation, the method shown in FIG. 4 further includes step 404.

404: The first STA sends a BA frame, and correspondingly the AP receives the BA frame, where the BA frame includes second indication information, and the second indication information indicates the duration in which the first STA adjusts the OM parameter.

In an example, after receiving the PPDU, the first STA sends the BA frame to the AP, where the BA frame includes the second indication information, to indicate the duration in which the first STA adjusts the OM parameter, so that the AP can flexibly adjust the length of the first field in the subsequent PPDU based on the second indication information.

In another example, the length of the first field in the PPDU is determined by the second indication information, and the first STA sends the BA frame to the AP after previously receiving the PPDU. The AP determines the length of the first field based on the second indication information in the BA frame.

For example, the length of the first field may be greater than or equal to the duration in which the first STA adjusts the OM parameter.

In a possible implementation, the second indication information indicates duration in which the first STA previously adjusts the OM parameter.

For example, the BA frame includes a last OM switching duration (last OM switching duration) field, and the last OM switching duration field carries the second indication information.

For example, the second indication information may indicate a difference between the duration in which the first STA adjusts the OM and the duration of the first field in the previous PPDU.

For example, the second indication information may be used to determine the MCS. For example, when the difference between the duration in which the first STA adjusts the OM and the duration of the first field in the previous PPDU is greater than a third threshold, the AP may determine that a packet error rate problem fed back in the BA is caused by an insufficient length of the first field. That is, the first STA does not complete adjustment of the OM parameter in the duration of the first field, or the first STA does not complete adjustment of the OM parameter before the start moment of the first data field, resulting in a high packet error rate. In this case, the packet error rate is high, and especially when an error occurs in data that is preferentially transmitted in the first data field, the AP may increase the length of the first field, to resolve the packet error rate problem, without reducing the MCS. The third threshold may be determined based on the duration of the first field and the duration in which the first STA adjusts the OM. For example, the third threshold is the duration of the first field or 20% of the duration in which the first STA adjusts the OM.

In another possible implementation, the second indication information may indicate maximum duration in which the first STA adjusts the OM parameter.

For example, the maximum duration in which the first STA adjusts the OM parameter may be determined by a capability of the first STA or duration for historically adjusting the OM parameter. For example, the maximum duration in which the first STA adjusts the OM parameter includes maximum duration in which the first STA adjusts the OM parameter in a period of time.

For example, the BA frame may include a maximum OM switching duration (max OM switching duration) field, and the maximum OM switching duration carries the second indication information. The BA frame may further include a maximum OM switching duration presence (max OM switching duration presence) field, indicating whether the maximum OM parameter switching duration field presents. For example, when the maximum OM switching duration presence field is set to 1, the maximum OM switching duration presence field indicates that the maximum OM switching duration field presents in the BA frame; or when the maximum OM switching duration presence field is set to 0, the maximum OM switching duration presence field indicates that the maximum OM switching duration field does not present in the BA frame.

It may be understood that the BA frame may be a protocol-defined BA frame, and the first STA or the AP newly adds a last OM switching duration field or a maximum OM switching duration field to an existing BA frame. Alternatively, the BA frame is a newly defined BA frame used to carry the second indication information.

In a possible implementation, the method shown in FIG. 4 may be applied to a multi-user scenario. In the multi-user scenario, the PPDU is used to transmit the data of the plurality of STAs, and the first STA is a STA that needs to perform OM parameter adjustment in the plurality of STAs. For example, the PPDU includes an MU PPDU. The first field is used to provide time for adjusting the OM parameter for the first STA, so that the first STA can adjust the OM parameter in the duration of the first field. For example, the first STA is in the low power mode or the energy saving mode, that is, the first STA receives the PPDU by using the low-capability receiver or the low power mode before adjusting the OM parameter.

In another possible implementation, the method shown in FIG. 4 may be applied to a single-user scenario. In the single-user scenario, the PPDU is used to transmit the data of the first STA, and the first RU is an RU, whose OM parameter needs to be adjusted, in the plurality of RUs corresponding to the first STA. For example, the PPDU includes an SU PPDU. In this implementation, when the first STA receives the PPDU, different OM parameters may be used on different RUs. Therefore, the first STA may adjust the OM parameter for a single RU. The first field is used to provide the time in which the first STA adjusts the OM parameter corresponding to the first RU. The duration of the first field may be determined based on the duration in which the first STA adjusts the OM parameter corresponding to the first RU.

For example, in the single-user scenario, the second field or the third field may be transmitted by at least one RU, the at least one RU is all or a part of the plurality of RUs corresponding to the first STA, and the at least one RU includes the first RU.

It may be understood that in this embodiment of this application, that the first STA adjusts the OM parameter may be replaced with that the first STA switches the OM. For example, the first STA switches from the energy saving mode to the non-energy saving mode. The first field may also be referred to as a padding (padding) field.

For example, for the PPDU, this embodiment of this application further provides the following several examples.

Example 1: The PPDU includes the first field, the second field, and the third field. The first field and the third field are transmitted by the RU corresponding to the first STA, and the second field is transmitted by the RUs corresponding to the plurality of STAs. The second field is located after the first field, and the third field is located after the second field.

For example, the plurality of STAs are STAs transmitting data in the PPDU, that is, the bandwidth range corresponding to the second field is the bandwidth range corresponding to the PPDU. For example, the third field may include the UHR-LTF corresponding to the first STA.

For example, the PPDU further includes a first SIG field. The first SIG field includes at least one of the following: the start location of the first field, the start location of the third field, the start location of the second field, the length of the first field, the length of the third field, and the length of the second field. The information may be included in the common field or the user field of the first SIG field. For example, the user field corresponding to the first STA may include the start location of the first field, the length of the first field, the length of the second field, and the length of the third field. A user field corresponding to another STA that is not the first STA may include the start location of the second field and the length of the second field.

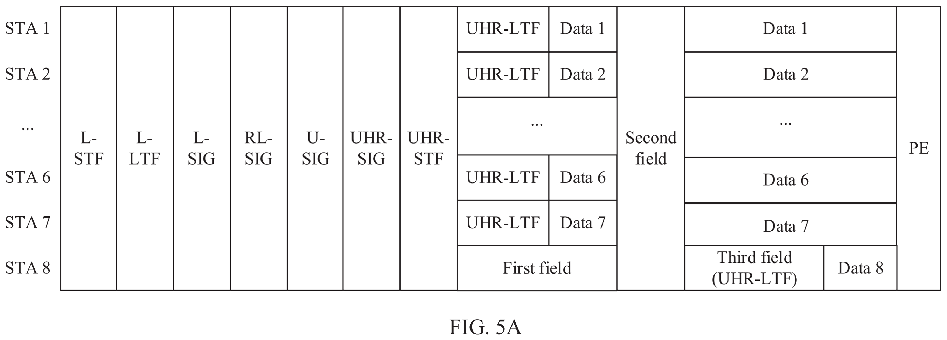

As shown in FIG. 5A, in FIG. 5A, eight STAs are used as an example, and are respectively a STA 1 to a STA 8. The first field and the third field are transmitted by an RU corresponding to the STA 8 (namely, the first STA), and the second field is transmitted by RUs corresponding to the STA 1 to the STA 8. The PPDU further includes at least one of the following: an L-STF, an L-LTF, a legacy-signal field (legacy-signal field, L-SIG), a repeated legacy-signal field (repeated legacy-signal field, RL-SIG), U-SIG, UHR-SIG, a UHR-STF, a plurality of UHR-LTFs, a plurality of data fields, and packet extension (package extension, PE). The first field is located after the UHR-STF. The L-STF, the L-LTF, the L-SIG, the RL-SIG, the U-SIG, the UHR-SIG, and the UHR-STF are transmitted in the RUs corresponding to the plurality of STAs. A plurality of data fields are used to transmit the data of the plurality of STAs, and any one of the plurality of data fields is transmitted by an RU corresponding to a corresponding STA. As shown in FIG. 5A, a data 1 field to a data 8 field are respectively used to transmit data of the STA 1 to the STA 8. For example, the data 1 field is used to transmit the data of the STA 1, and the data 1 field is transmitted in the RU corresponding to the STA 1. The plurality of UHR-LTFs correspond to a STA (for example, a STA in a non-energy saving mode) that is in the plurality of STAs and that does not adjust the OM parameter. A number of UHR-LTFs is the same as a number of STAs that are in the plurality of STAs and that do not adjust the OM parameter. Any one of the plurality of UHR-LTFs is transmitted by an RU corresponding to a corresponding STA that does not adjust the OM parameter. For example, in FIG. 5A, the STA 1 to the STA 7 do not adjust the OM parameter, and the PPDU includes seven UHR-LTFs (which are respectively a UHR-LTF 1 to a UHR-LTF 7). The UHR-LTF 1 is transmitted by the RU corresponding to the STA 1, the UHR-LTF 2 is transmitted by the RU corresponding to the STA 2, ..., and the UHR-LTF 7 is transmitted by the RU corresponding to the STA 7.

In this example, the second field is transmitted by the RUs corresponding to the plurality of STAs. For a STA that does not need to adjust the OM parameter, the second field may be used as a midamble (Midamble), to enhance mobility and channel estimation capabilities of the STA, so that the STA can better receive data. For a STA (namely, the first STA) that needs to adjust the OM parameter, impact of data of another STA on the second field can be avoided, so that the first STA can better adjust AGC after adjusting the OM parameter.

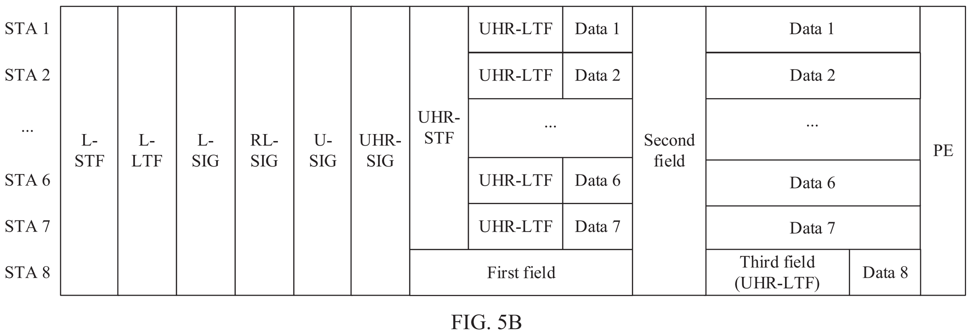

In this embodiment of this application, the start location of the first field may be flexibly indicated by the first SIG field. For example, in FIG. 5A, the first field is located after the UHR-STF, or as shown in FIG. 5B, the first field may be further located after the UHR-SIG.

Example 2: The PPDU includes the first field, the second field, and the third field. The first field, the second field, and the third field are transmitted by the RU corresponding to the first STA, the second field is located after the first field, and the third field is located after the second field. For example, the third field may include the UHR-LTF corresponding to the first STA.

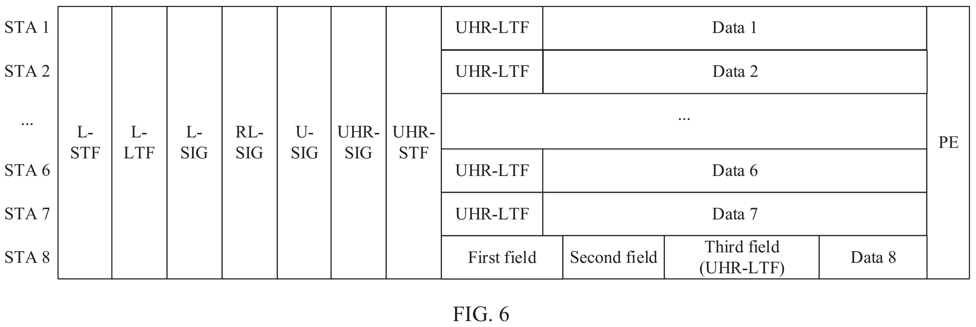

As shown in FIG. 6, the PPDU transmits data of a STA 1 to a STA 8, and the first field, the second field, and the third field are transmitted by an RU corresponding to the STA 8 (namely, the first STA). The PPDU further includes at least one of the following: an L-STF, an L-LTF, L-SIG, RL-SIG, U-SIG, UHR-SIG, a UHR-STF, a plurality of UHR-LTFs, a plurality of data fields, and PE.

For example, the third field may include the UHR-LTF corresponding to the first STA.

In this example, the first field, the third field, and the second field are transmitted by the RU corresponding to the first STA, so that data transmission of another STA cannot be affected, and transmission resource overheads of the first field, the third field, and the second field for the another STA are avoided.

In this example, the start location of the first field, the start location of the third field, the start location of the second field, the length of the first field, the length of the third field, the length of the second field, and the like may be included in the user field corresponding to the first STA in the first SIG field.

Example 3: The PPDU includes the first field and the third field. The first field and the third field are transmitted by the RU of the first STA. The third field is located after the first field. For example, the third field may include the UHR-LTF corresponding to the first STA.

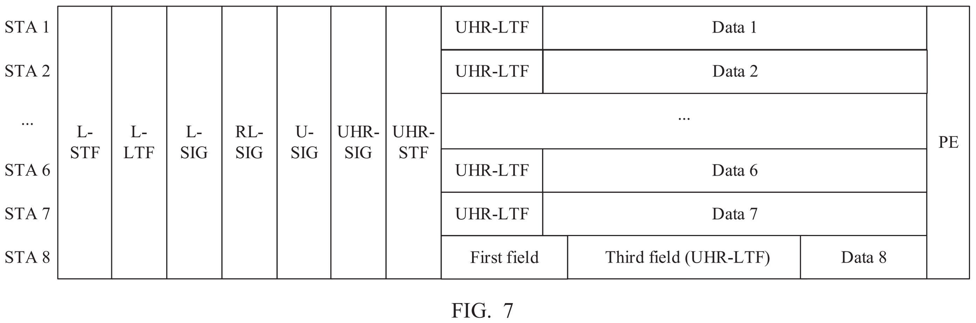

As shown in FIG. 7, the PPDU transmits data of a STA 1 to a STA 8, and the first field and the third field are transmitted by an RU corresponding to the STA 8 (namely, the first STA). The PPDU further includes at least one of the following: an L-STF, an L-LTF, L-SIG, RL-SIG, U-SIG, UHR-SIG, a UHR-STF, a plurality of UHR-LTFs, a plurality of data fields, and PE.

In this example, the first field and the third field are transmitted by the RU of the first STA, so that resource overheads can be reduced.

In this example, the start location of the first field, the start location of the third field, the length of the first field, the length of the third field, and the like may be included in the user field corresponding to the first STA in the first SIG field.

Example 4: The PPDU includes the first field and the third field. The first field is transmitted by the RU corresponding to the first STA, and the third field is transmitted by the RUs corresponding to the plurality of STAs. The third field is located after the first field. For example, the third field may include the UHR-LTF corresponding to the first STA.

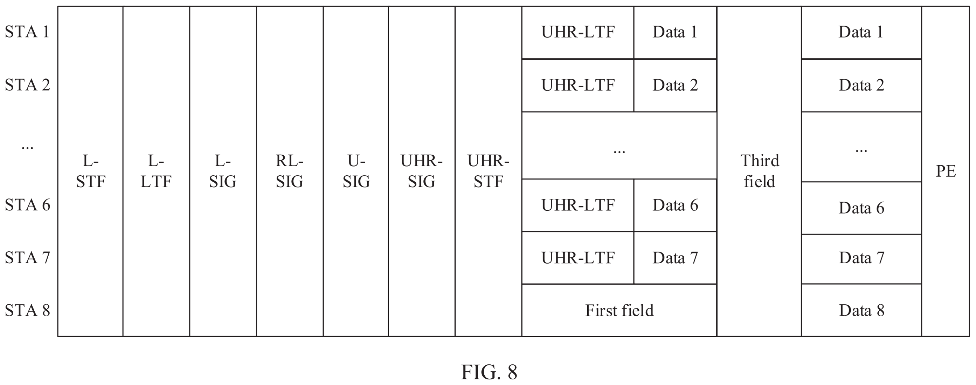

As shown in FIG. 8, the PPDU transmits data of a STA 1 to a STA 8, the first field is transmitted by an RU corresponding to the STA 8 (namely, the first STA), and the third field is transmitted by RUs corresponding to the STA 1 to the STA 8. The PPDU further includes at least one of the following: an L-STF, an L-LTF, L-SIG, RL-SIG, U-SIG, UHR-SIG, a UHR-STF, a plurality of UHR-LTFs, a plurality of data fields, and PE.

For example, the common field or the user field of the first SIG field in the PPDU may include at least one of the start location of the first field, the length of the first field, the start location of the third field, and the length of the third field. For example, the user field corresponding to the first STA may include the start location of the first field, the length of the first field, and the length of the third field. A user field corresponding to another STA that is not the first STA may include the start location of the third field and the length of the third field.

In this example, the third field is transmitted by the RUs corresponding to the plurality of STAs, so that the plurality of STAs can perform channel estimation based on the third field, and channel estimation capabilities of the plurality of STAs can be enhanced.

Example 5: The PPDU includes the first field, the second field, and the third field. The first field is transmitted by the RU of the first STA, and the third field and the second field are transmitted by the RUs corresponding to the plurality of STAs. The second field is located after the first field, and the third field is located after the second field. For example, the third field may include the UHR-LTF corresponding to the first STA.

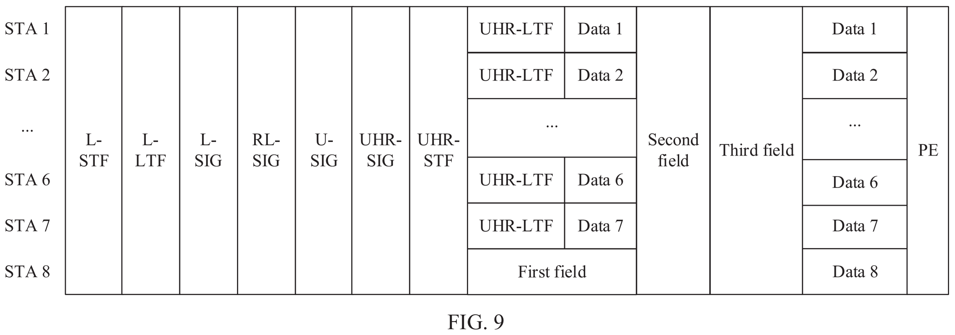

As shown in FIG. 9, the PPDU transmits data of a STA 1 to a STA 8, the first field is transmitted by an RU corresponding to the STA 8 (namely, the first STA), and the second field and the third field are transmitted by RUs corresponding to the STA 1 to the STA 8. The PPDU further includes at least one of the following: an L-STF, an L-LTF, L-SIG, RL-SIG, U-SIG, UHR-SIG, a UHR-STF, a plurality of UHR-LTFs, a plurality of data fields, and PE.

In this implementation, the third field and the second field are transmitted by the RUs corresponding to the plurality of STAs, so that the plurality of STAs can adjust AGC and perform channel estimation based on the second field and the third field, and the plurality of STAs can better receive the data.

Example 6: The PPDU includes the first field, the third field, and the second field, the first field is transmitted by the RU corresponding to the first STA and an RU corresponding to the second STA, and the duration of the first field is determined by the duration in which the first STA adjusts the OM parameter and duration in which the second STA adjusts the OM parameter.

For example, the first field is used to provide time for adjusting the OM parameter for the first STA and time for adjusting the OM parameter for the second STA, that is, the first STA and the second STA may adjust the OM parameter in the duration of the first field. The duration of the first field is determined by the duration in which the first STA adjusts the OM parameter and the duration in which the second STA adjusts the OM parameter. For example, both the duration in which the first STA adjusts the OM parameter and the duration in which the second STA adjusts the OM parameter are less than or equal to the duration of the first field.

For example, the third field may be transmitted by the RUs corresponding to the plurality of STAs, or the third field may be transmitted by the RUs corresponding to the first STA and the second STA. The second field may be transmitted by the RUs corresponding to the plurality of STAs, or the second field may be transmitted by the RUs corresponding to the first STA and the second STA. For example, the third field may include the UHR-LTF corresponding to the first STA and a UHR-LTF corresponding to the second STA.

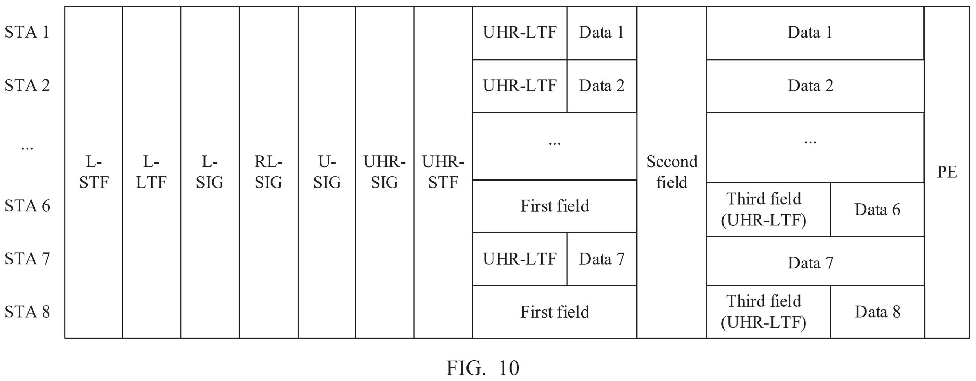

For example, as shown in FIG. 10, the plurality of STAs include a STA 1 to a STA 8, that is, the PPDU transmits data of the STA 1 to the STA 8. The first field and the third field may be transmitted by RUs corresponding to the STA 8 (namely, the first STA) and the STA 6 (namely, the second STA), and the second field is transmitted by RUs corresponding to the STA 1 to the STA 8. As shown in FIG. 10, the PPDU further includes at least one of the following: an L-STF, an L-LTF, L-SIG, RL-SIG, U-SIG, UHR-SIG, a UHR-STF, a plurality of UHR-LTFs, a plurality of data fields, and PE.

For example, when the RUs corresponding to the first STA and the second STA are used for transmission, and the second field is transmitted by the RUs corresponding to the plurality of STAs, the common field of the first SIG field may include the start location of the second field and the length of the second field, and the user field of the first STA and a user field of the second STA include the length of the first field and the length of the third field. The first STA and the second STA may determine the start location of the first field based on the start location of the second field and the length of the first field.

It may be understood that the first field may be alternatively transmitted by an RU corresponding to another STA, to provide time for adjusting the OM parameter for the another STA. Herein, the first STA and the second STA are used as an example.

In this example, the first field may be used to provide time for adjusting the OM parameter for the first STA and time for adjusting the OM parameter for the second STA, and the duration of the first field is determined by the duration in which the first STA adjusts the OM parameter and the duration in which the second STA adjusts the OM parameter, so that the first STA and the second STA can complete the OM parameter in the first field, thereby ensuring that the first STA and the second STA can better receive the data.

It may be understood that in the single-user scenario, the duration of the first field is determined by duration in which the first STA adjusts OM parameters of the first RU and the second RU. That is, the duration of the first field may be configured based on longest time for adjusting the OM parameters of the first RU and the second RU.

Example 7: The PPDU includes the first field and the third field, the first field is transmitted by the RU corresponding to the first STA and an RU corresponding to the second STA, and the duration of the first field is determined by the duration in which the first STA adjusts the OM parameter and duration in which the second STA adjusts the OM parameter.

For example, the third field may include the UHR-LTF corresponding to the first STA and a UHR-LTF corresponding to the second STA.

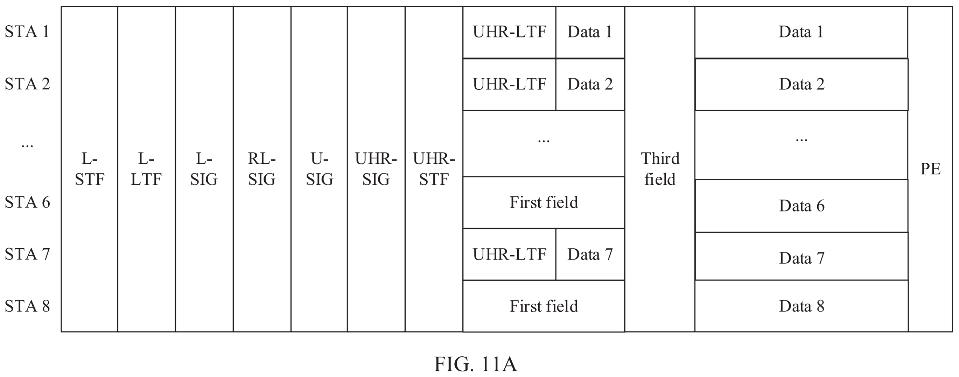

In an example, as shown in FIG. 11A, the PPDU transmits data of a STA 1 to a STA 8, the first field is transmitted by RUs corresponding to the STA 6 (namely, the second STA) and the STA 8 (namely, the first STA), and the third field may be transmitted by the RUs corresponding to the plurality of STAs (namely, the STA 1 to the STA 8).

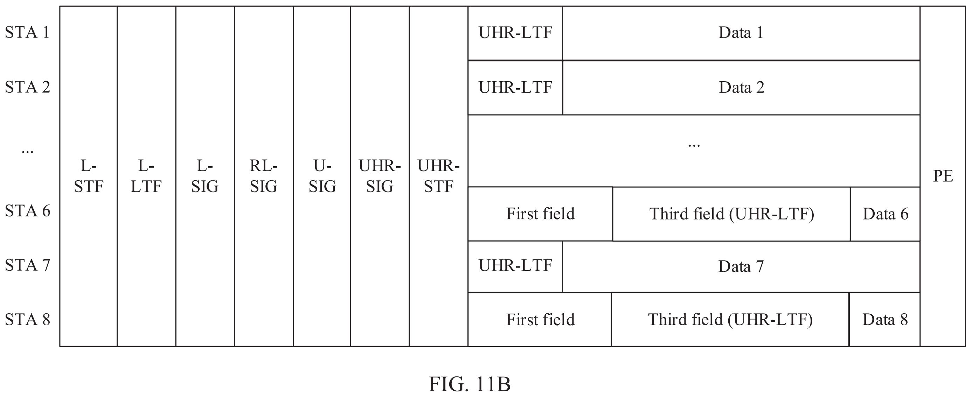

In another example, as shown in FIG. 11B, the third field may be transmitted by the RUs corresponding to the STA 6 (namely, the second STA) and the STA 8 (namely, the first STA).

In this example, the PPDU includes the first field and the third field, the first field provides time for adjusting the OM parameter for the first STA and time for adjusting the OM parameter for the second STA, and the first STA and the second STA can perform channel estimation based on the third field, so that reliability of data transmission between the first STA and the second STA can be ensured, and resource overheads can be reduced.

Example 8: The PPDU includes the first field and the fourth field. The first field is transmitted by the RU corresponding to the first STA and the RU corresponding to the second STA, duration of the fourth field is determined by the duration of the first field and duration in which the second STA adjusts the OM parameter, the fourth field is located after the first field, and the fourth field is transmitted by the RU corresponding to the second STA.

For example, when a difference between the duration in which the second STA adjusts the OM parameter and the duration in which the first STA adjusts the OM parameter is greater than a second threshold, the PPDU may provide, by using the first field, time for adjusting the OM parameter for the first STA, and provide, by using the first field and the fourth field, time for adjusting the OM parameter for the second STA. The first STA adjusts the OM parameter in the duration of the first field, and the second STA adjusts the OM parameter in the duration of the first field and the duration of the fourth field. Therefore, the AP may adjust the duration of the first field and the duration of the fourth field based on the duration in which the first STA adjusts the OM parameter and the duration in which the second STA adjusts the OM parameter. For example, the duration of the fourth field may be determined by the duration of the first field and the duration in which the second STA adjusts the OM parameter. For example, the duration of the fourth field may be greater than or equal to a first difference, and the first difference is a difference between the duration in which the second STA adjusts the OM parameter and the duration of the first field.

In a possible implementation, the PPDU further includes the third field and/or the second field. The third field is used by the first STA to perform channel estimation after adjusting the OM parameter, and the second field is used by the first STA to adjust the AGC after adjusting the OM parameter. The third field may be transmitted by the RUs corresponding to the plurality of STAs, or the third field may be transmitted by the RU corresponding to the first STA. The second field may be transmitted by the RUs corresponding to the plurality of STAs, or the second field may be transmitted by the RU corresponding to the first STA. For example, the third field is transmitted by the RU corresponding to the first STA, and the second field is transmitted by the RUs corresponding to the plurality of STAs.

For example, the third field may include the UHR-LTF corresponding to the first STA.

In another possible implementation, the PPDU further includes a fifth field and/or a sixth field. The fifth field or the sixth field is after the fourth field, the fifth field is used by the second STA to adjust the AGC after the OM parameter is adjusted, and the sixth field is used by the second STA to perform channel estimation after the OM parameter is adjusted.

For example, the fifth field is transmitted by the RU corresponding to the second STA, or the fifth field is transmitted by the RUs corresponding to the plurality of STAs. The sixth field is transmitted by the RU corresponding to the second STA, or the sixth field is transmitted by the RUs corresponding to the plurality of STAs. For example, the fifth field may include an R-UHR-STF, and the sixth field may include a UHR-LTF.

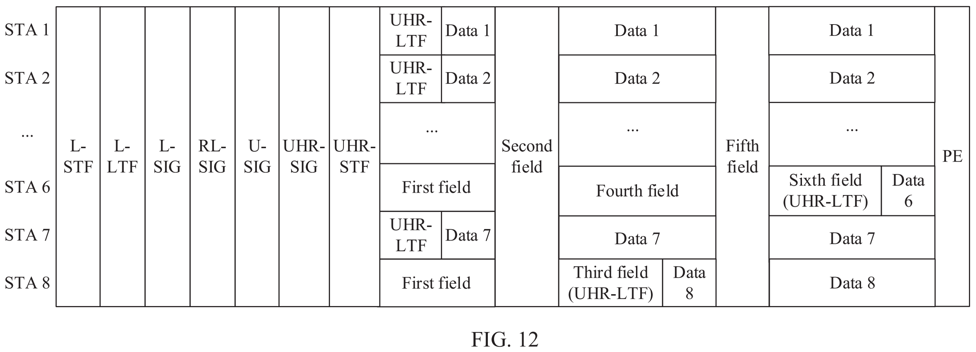

FIG. 12 is an example of a PPDU according to an embodiment of this application. As shown in FIG. 12, the PPDU includes the first field, the third field, the second field, the fourth field, the fifth field, and the sixth field. The PPDU transmits data of the STA 1 to the STA 8. The first field is transmitted by RUs corresponding to the STA 8 (namely, the first STA) and the STA 6 (namely, the second STA), the third field is transmitted by the RU corresponding to the STA 8, the second field is transmitted by RUs corresponding to a plurality of STAs (namely, the STA 1 to the STA 8), the fourth field is transmitted by the RU corresponding to the STA 6, the fifth field is transmitted by the RUs corresponding to the STA 1 to the STA 8, and the sixth field is transmitted by the RU corresponding to the STA 6. The PPDU may further include at least one of the following: an L-STF, an L-LTF, L-SIG, RL-SIG, U-SIG, UHR-SIG, a UHR-STF, a plurality of UHR-LTFs, and a plurality of data fields.

For example, the first SIG field in the PPDU includes at least one of the following: a start location of the first field, a start location of the third field, a start location of the second field, a start location of the fourth field, a start location of the fifth field, a start location of the sixth field, a length of the first field, a length of the third field, a length of the second field, a length of the fourth field, a length of the fifth field, and a length of the sixth field.

For example, the PPDU may include a plurality of fields (for example, the first field and the fourth field) used to provide time for adjusting the OM parameter for the STA. The user field of the first SIG field may include a first number of corresponding STAs, and the first number is a number of fields used to provide time for adjusting the OM parameter for the STA. For example, the first field provides time for adjusting the OM parameter for the first STA, and the first number of the first STAs is 1. The first field and the fourth field provide time for adjusting the OM parameter for the second STA, and a first number of the second STAs is 2.

In this example, when both the first STA and the second STA need to adjust the OM parameter, and the duration in which the first STA adjusts the OM parameter differs greatly from the duration in which the second STA adjusts the OM parameter, the PPDU may include the first field and the fourth field, the first STA adjusts the OM parameter in the duration of the first field, and the second STA adjusts the OM parameter in the duration of the first field and the duration of the fourth field, so that impact of the duration in which the second STA adjusts the OM parameter on data transmission of the first STA can be small.

Example 9: The PPDU includes a first field combination, and the first field combination includes at least one of the following: the first field, the third field, and the second field.

For example, the first SIG field in the PPDU includes at least one of the following: a length of the first field combination, a start location of the first field combination, a mode of the first field combination, and a size of the first field combination. The mode of the first field combination indicates fields (namely, a part of the first field combination) included in the first field combination and combination manners of the fields. For example, a mode field of the first field combination indicates that the first field combination includes the first field and the third field, or a mode field of the first field combination indicates that the first field combination includes the first field, the third field, and the second field.

The length of the first field combination may indicate a total number of symbols or duration occupied by the first field combination. The size of the first field combination indicates lengths of fields included in the first field combination. For example, when the first field combination includes the first field and the third field, a size field of the first field combination indicates the length of the first field and the length of the third field. The start location of the first field combination indicates the start location of the first field in the first field combination. For example, the first field combination includes the first field and the third field, the first field is before the third field, and the start location of the first field combination indicates the start location of the first field.

It may be understood that when the size of the first field combination indicates the length of each field included in the first field combination, a total length of the first field combination may be determined by the length of each field included in the first field combination. Therefore, the PPDU may not include a length field of the first field combination.

For example, the first SIG field may further include the start location and the length of the field (namely, the first field, the second field, or the third field) included in the first field combination. If relative locations between the first field, the second field, and the third field can be determined, the first SIG field may include only a start location of one of the fields, and the first STA may determine a start location of another field based on the start location and the relative locations between the first field, the second field, and the third field. If a part of the first field combination and the lengths of the second field and the third field are known, the first SIG may not include the length of the first field. If a part of the first field combination and the lengths of the first field and the second field are known, the first SIG may not include the length of the third field. If a part of the first field combination and the lengths of the first field and the third field are known, the first SIG may not include the length of the second field.

In a possible implementation, the mode of the first field combination may indicate fields included in the first field combination and lengths of the fields. In this implementation, a plurality of first field combination modes may be predefined, and a length, an included field, a length of each field, and the like of each first field combination mode may be protocol-specified, or may be determined through negotiation between the AP and the STA. The PPDU may indicate the mode of the first field combination by using a mode (mode) field, and the first STA can determine, based on the mode of the first field combination, fields included in the first field combination and lengths of the fields. For example, the mode of the first field combination may include a first mode and a second mode. Fields included in the first field combination of the first mode and the second mode are different, or lengths of the fields are different. When the mode field is set to 0, the mode of the first field combination is the first mode. When the mode field is set to 1, the mode of the first field combination is the second mode.

It may be understood that in this case, the PPDU may not include the size of the first field combination. A total length of the first field combination may be determined by the lengths of the fields included in the first field combination. Therefore, the PPDU may not include the length field of the first field combination.

In a possible implementation, the PPDU may include one or more field combinations, and each field combination includes at least one of a padding field, a first STF, and a first LTF. The padding field is used to provide time (for example, the first field or the fourth field) in which the STA adjusts the OM parameter, the first STF is used to adjust the AGC (for example, the second field or the fifth field) after the STA adjusts the parameter, and the first LTF is used to perform channel estimation (for example, the third field or the sixth field) after the STA adjusts the parameter. For example, the one or more field combinations include a first field combination and a second field combination, the first field combination includes at least one of the first field, the second field, and the third field, and the second field combination includes at least one of the fourth field, the fifth field, and the sixth field.

For a combination manner of the fields in the first field combination, refer to related descriptions in Example 1 to Example 5. Details are not described herein.

In an example, the first SIG field in the PPDU may include a number of the one or more field combinations and a length of a field included in any one of the one or more field combinations.

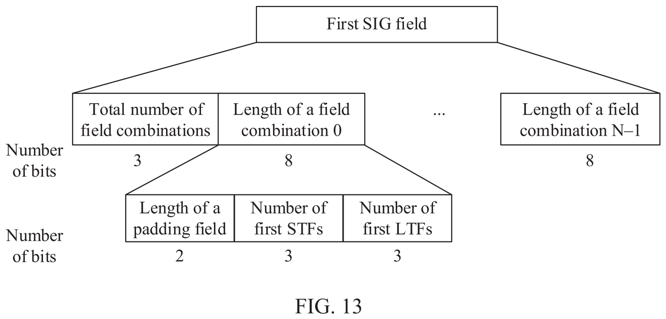

For example, the PPDU includes N field combinations. As shown in FIG. 13, the first SIG field in the PPDU may include at least one of the following: a total number of field combinations (which may occupy 3 bits) and a length field of the N field combinations (a length of a field combination 0 to a length of a field combination N-1). A length field (which may occupy 8 bits) of each field combination of the length field of the N field combinations includes a length field (which may occupy 2 bits) of the padding field, a number field (which may occupy 3 bits) of the first STF, and a number field (which may occupy 3 bits) of the first LTF. The length field of the padding field indicates a length, duration, or a number of occupied symbols of the padding field. For example, the length field of the padding field may indicate the length of the padding field by rank, that is, different values of the length field of the padding field indicate different lengths of the padding field. For example, when the value of the length field of the padding field is 1, it indicates that the length of the padding field is a first length; or when the value of the length field of the padding field is 2, it indicates that the length of the padding field is a second length. A number field of the first STF indicates a number of first STFs, duration of the first STF, or a length of the first STF, where the number of first STFs may be a number of symbols occupied by the first STF or a number of sequences included in the first STF. When the first STF includes an R-UHR-STF, the number of first STFs may be a number of repetitions of the UHR-STF. The number field of the first LTF indicates a number of first LTFs, duration of the first LTF, or a length of the first LTF, where the number of first LTFs may be a number of symbols occupied by the first LTF or a number of sequences included in the first LTF. When the first LTF includes an R-UHR-LTF, the number of first LTFs may be a number of repetitions of the UHR-LTF.

For example, a start location of the first STF in an n^{th} field combination in the N field combinations may be determined by a length field of a padding field in the n^{th} field combination and the number field of the first STF. If the number of first LTFs and the number of first STFs are known, for example, the number of first LTFs and the number of first STFs are the same as the number of UHR-LTFs and the number of UHR-STFs in the PPDU, the length field of the n^{th} field combination may not include the number of first LTFs and the number of first STFs, that is, the length field of the n^{th} field combination needs to include only the length of the padding field.

It may be understood that a number of bits occupied by the foregoing fields is merely an example, and should not be construed as a limitation on this application. In this embodiment of this application, a number of bits occupied by the fields may be flexibly configured as required. A sequence of the fields (for example, the length field of the padding field, the number field of the first STF, and the number field of the first LTF) in the first SIG field is not limited in this embodiment of this application.

In another example, lengths of fields in different field combinations are the same. For example, lengths of the fields in the one or more field combinations are protocol-specified or specified through negotiation between the AP and the STA. For example, lengths of padding fields, first STFs, and first LTFs in any two field combinations in the one or more field combinations are the same. For example, the one or more field combinations include a first field combination and a second field combination, a length of a padding field in the first field combination is the same as a length of a padding field in the second field combination, a length of a first LTF in the first field combination is the same as a length of a first LTF in the second field combination, and a length of a first STF in the first field combination is the same as a length of an STF in the second field combination. In this implementation, the first SIG field includes a field combination number field or a padding field number field, indicating a number of field combinations or a number of padding fields, and the first STA can determine a total length of the one or more field combinations based on the number of field combinations or the number of padding fields. Alternatively, the first SIG field may include the total length of the one or more field combinations, and the first STA can determine a number of the one or more field combinations based on the total length of the one or more field combinations.

For example, the first SIG field may further include any one of the following: the length field of the padding field, the number field of the first STF, and the number field of the first LTF. The length field of the padding field indicates a length, duration, or a number of occupied symbols of the padding field in the one or more field combinations. The number field of the first STF indicates a number, a length, or a number of occupied symbols of the first STF in the one or more field combinations. The number field of the first LTF indicates a number, a length, or a number of occupied symbols of the first LTF in the one or more field combinations. It may be understood that if the length of the padding field is protocol-specified or specified through negotiation between the AP and the STA, the first SIG field may not include the length field of the padding field. If the number of first STFs is protocol-specified or specified through negotiation between the AP and the STA, the first SIG field may not include the number field of the first STF. If the number of first LTFs is protocol-specified or specified through negotiation between the AP and the STA, the first SIG field may not include the number field of the first LTF.

In a possible implementation, when the PPDU includes a plurality of field combinations, the user field of the first SIG field includes a field combination number field, indicating a number of field combinations corresponding to a STA corresponding to the user field. The STA adjusts the OM parameter in duration of a padding field of a field combination corresponding to the STA.

In another possible implementation, the first SIG field includes mode fields of a plurality of field combinations, respectively indicating modes of the plurality of field combinations, and the mode of the field combination indicates a field included in a corresponding field combination. For example, the mode of the field combination further indicates lengths of the fields of the corresponding field combination, and the first SIG field may further include the total length of the field combination.

For example, the mode of the field combination further indicates the length of the padding field of the corresponding field combination, and the first SIG field may further include the number of first STFs or the number of first LTFs, to indicate the number of first STFs and the number of first LTFs.

It may be understood that the padding field is merely a name of a field used to provide time in which the STA adjusts the OM parameter in this application, and the name of the field used to provide the time in which the STA adjusts the OM parameter is not limited in this application.

It may be understood that the foregoing describes several examples of the PPDU in the multi-user scenario. In the single-user scenario, the RU corresponding to the first STA may be replaced with the first RU, and the RUs corresponding to the plurality of STAs may be replaced with the plurality of RUs corresponding to the first STA.

For example, for the first field, this embodiment of this application further provides the following several implementations.

Implementation 1: The first field is used to carry first data of the first STA, and an OM parameter corresponding to the first data carried in the first field includes the OM parameter before being adjusted by the first STA.

For example, the OM parameter corresponding to the first data is an OM parameter used when the first STA receives the first data. In the duration of the first field, the first STA has not completed adjustment of the OM parameter, because the first STA may receive, by using the OM parameter before being adjusted, the first data carried in the first field.

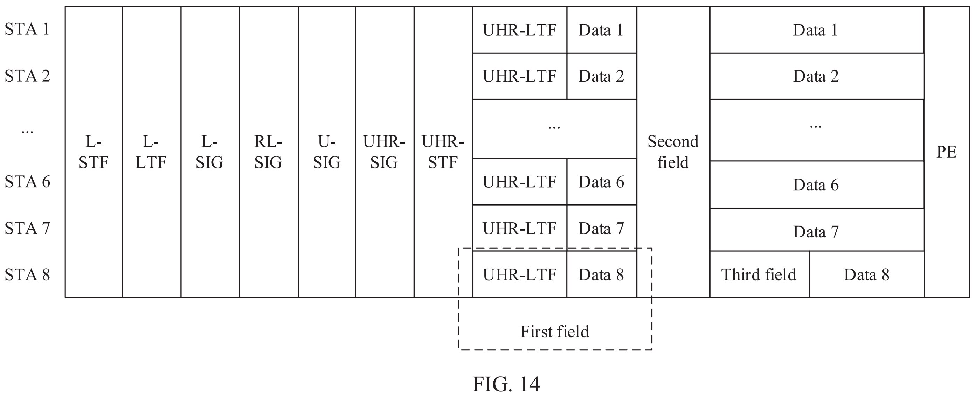

For example, the first field may further include a long training field, used by the first STA to perform channel estimation before receiving the first data. For example, as shown in FIG. 14, the first field includes a UHR-LTF and a second data field, and the second data field is used to transmit the first data.

In a possible implementation, the PPDU further includes the first data field, the first data field is located after the first field, the first data field is used to carry the first data, and the OM parameter corresponding to the first data carried in the first data field includes the OM parameter after being adjusted by the first STA. The first data field is transmitted by the RU corresponding to the first STA.

For example, the first data field is after the first field, and the first STA completes OM parameter switching in the duration of the first data field. Therefore, the first STA may receive, by using the adjusted OM parameter, the first data carried in the first data field. In this implementation, after completing adjustment of the OM parameter, the first STA repeatedly transmits the first data carried in the first field, so that the first STA can perform demodulation based on data that is received twice, thereby improving data reliability and supporting a longer transmission distance.

In this implementation, the first field carries the data of the first STA, so that resources can be appropriately used, and a waste of resources can be avoided.

Implementation 2: The first field is used to carry data of another STA (for example, a third STA) that is not the first STA.

For example, the third STA is a STA that does not need to adjust the OM parameter and that is in the plurality of STAs that transmit data in the PPDU. For example, the third STA may include a STA in a non-energy saving mode. The first field carries the data of the third STA, and the third STA receives the data in the RU corresponding to the first STA in the duration of the first field.

For example, the length of the first field is an integer multiple of an orthogonal frequency-division multiplexing (orthogonal frequency-division multiplexing, OFDM) symbol.

For example, a bandwidth range of the RU corresponding to the first STA is greater than or equal to a bandwidth range of an RU corresponding to the third STA.

For example, the PPDU further includes the first SIG field, the first SIG field carries third indication information, and the third indication information indicates that the first field carries the data of the third STA. For example, the first SIG field includes a seventh field, and the third indication information is carried in the seventh field.

In an example, the seventh field is included in the user field that is in the first SIG field and that corresponds to the third STA. For example, the seventh field may include at least one bit, and the at least one bit indicates whether the data of the third STA is transmitted in the first field. For example, the seventh field includes one bit. When a value of the one bit is 1, it indicates that the data of the third STA is transmitted in the first field. The third STA may determine a location of the first field based on information such as the start location of the first field or the length of the first field in the first SIG field, and receive the data in the first field.

In another example, the seventh field is included in the common field of the first SIG field. For example, the seventh field may include at least one bit, and the at least one bit indicates whether the first field carries data of another STA that is not the first STA. For example, the seventh field includes one bit. When a value of the one bit is 1, it indicates that the first field carries the data of the another STA that is not the first STA, and the another STA includes the third STA. The third STA may determine a location of the first field based on information such as the start location of the first field or the length of the first field in the first SIG field, and receive the data in the first field.

In a possible implementation, a difference between a midpoint frequency of the RU corresponding to the third STA and a midpoint frequency of the RU corresponding to the first STA is less than a first threshold. For example, the RU corresponding to the third STA is adjacent to the RU corresponding to the first STA, and the first threshold may be determined based on bandwidth ranges of the RUs corresponding to the first STA and the third STA. For example, the first threshold may be 5 megahertz (Megahertz, MHz). In this implementation, the third STA needs to detect only a user field adjacent to a user field corresponding to the third STA, to determine whether the first field carries the data of the third STA, and does not need to detect all user fields in the first SIG field, so that a waste of resources of the third STA can be reduced.

In a possible implementation, the first SIG field includes a first user field, the first user field carries third indication information and identification information of the third STA, and the RU corresponding to the first user field is included in the RU corresponding to the first STA. For example, a STA-ID of the first user field includes an identifier of the third STA.

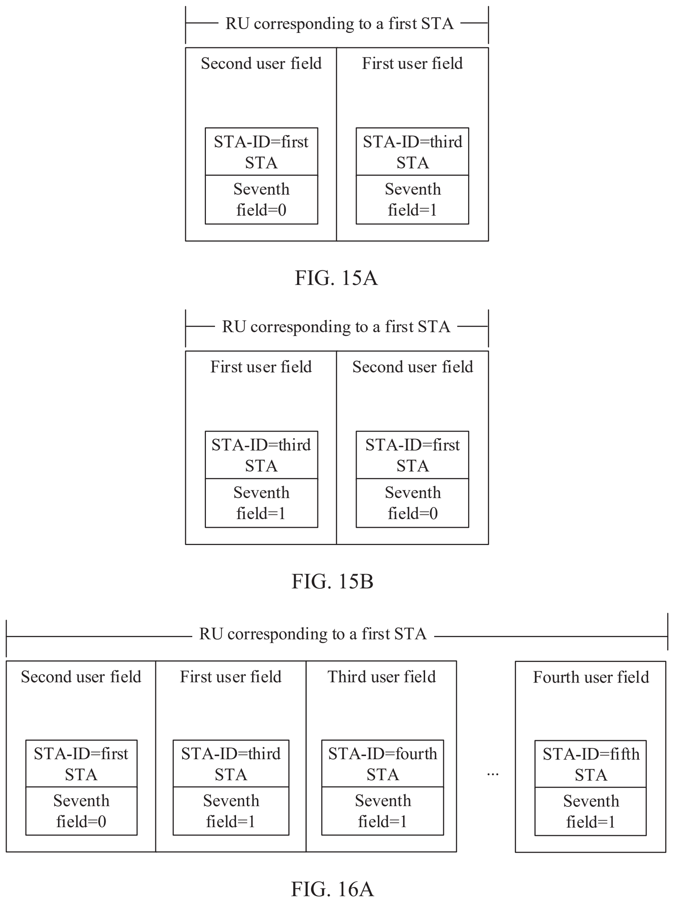

For example, the RU corresponding to the first STA may correspond to a plurality of user fields, so that the first field can carry data of a plurality of STAs, and the plurality of STAs include the third STA. For example, in the duration of the first field, the RU corresponding to the first STA may be used to transmit the data of the third STA. As shown in FIG. 15A or FIG. 15B, the RU corresponding to the first STA corresponds to the first user field and the second user field. The second user field includes identification information of the first STA and a seventh field, and a value of the seventh field in the second user field is different from a value of the seventh field in the first user field. For example, the value of the seventh field in the second user field is 0, and the value of the seventh field in the first user field is 1, to indicate that the first field carries the data of the third STA. The second user field may be located before the first user field, or the second user field may be located after the first user field.

It may be understood that a sequence of the first user field and the second user field is not limited in this application. For example, as shown in FIG. 15A, the first user field is located after the second user field. For another example, as shown in FIG. 15B, the first user field is located before the second user field.

In a possible implementation, in the duration of the first field, the RU corresponding to the first STA may be used to transmit the data of the plurality of STAs.

For example, the user field corresponding to the RU corresponding to the first STA may include the user field (the second user field) corresponding to the first STA and the plurality of user fields corresponding to the plurality of STAs, and a value of the seventh field in the plurality of user fields is different from a value of the seventh field in the second user field, to indicate that the RU corresponding to the first STA transmits the data of the plurality of STAs in the duration of the first field.

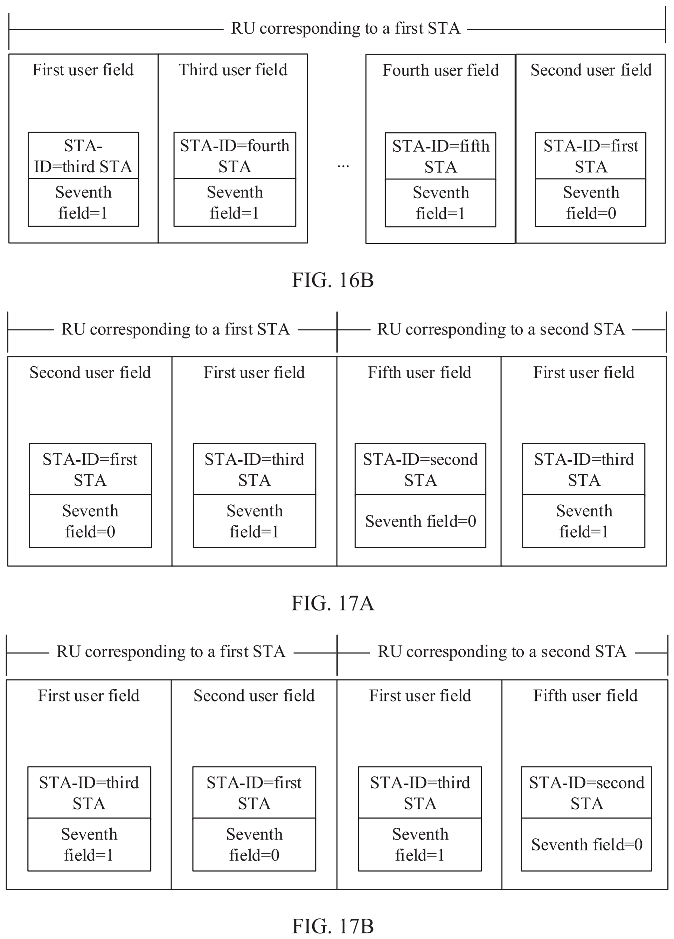

For example, as shown in FIG. 16A or FIG. 16B, in the duration of the first field, the RU corresponding to the first STA may be used to transmit the data of the third STA, the fourth STA, and the fifth STA. The user field corresponding to the RU corresponding to the first STA includes the first user field, the second user field, a third user field, and a fourth user field. The second user field includes the identification information of the first STA, and a value of the seventh field in the second user field is 0. The first user field, the third user field, and the fourth user field respectively correspond to the third STA, the fourth STA, and the fifth STA, and include identification information of corresponding STAs. Values of the seventh field in the first user field, the third user field, and the fourth user field are 1, and indicate that data of corresponding STAs in the duration of the first field is transmitted by the RU corresponding to the first STA. As shown in FIG. 16A, the first user field, the third user field, and the fourth user field may be after the second user field. Alternatively, as shown in FIG. 16B, the first user field, the third user field, and the fourth user field may be before the second user field.

For example, the bandwidth range of the RU corresponding to the first STA is greater than or equal to bandwidth ranges of the RUs corresponding to the plurality of STAs, and the plurality of STAs are STAs whose data is transmitted by using the first field. A number of subcarriers or subchannels occupied by data of any STA in the plurality of STAs is determined by an RU corresponding to the STA. For example, a number of subcarriers or subchannels occupied by the data of the third STA is equal to a number of subcarriers or subchannels included in the RU corresponding to the third STA. Alternatively, a number of subcarriers or subchannels occupied by data of any one of the plurality of STAs is an integer multiple of a minimum subcarrier number, and the minimum subcarrier number is a minimum value of a number of subcarriers included in the RUs corresponding to the plurality of STAs.

In a possible implementation, the first field is transmitted by the RUs corresponding to the first STA and the second STA, and the first field carries the data of the third STA. That is, in the duration of the first field, the RUs corresponding to the first STA and the second STA transmit the data of the third STA.

As shown in FIG. 17A or FIG. 17B, the user field corresponding to the RU corresponding to the first STA includes the first user field and the second user field. The user field corresponding to the RU corresponding to the second STA includes the first user field and a fifth user field, the fifth user field includes identification information of the second STA and the seventh field, a value of the seventh field in the fifth user field is the same as a value of the seventh field in the second user field, and the value of the seventh field in the fifth user field is the same as the value of the seventh field in the first user field. For example, the values of the seventh field in the fifth user field and the second user field are 0, and the value of the seventh field in the first user field is 1. As shown in FIG. 17A, the first user field may be after the second user field or the fifth user field. Alternatively, as shown in FIG. 17B, the first user field may be before the second user field or the fifth user field.

In this implementation, the first field may carry data of another STA (for example, the third STA), so that the first field can be fully used, thereby avoiding a waste of resources.

Implementation 3: The first field includes at least one of the following: a random sequence, a legacy-short training field L-STF, a legacy-long training field L-LTF, an ultra high reliability short training field UHR-STF, and an ultra high reliability long training field UHR-LTF.

For example, when the first field carries the UHR-LTF, the third field may be a repeat UHR-LTF (repeat UHR-LTF, R-UHR-LTF). When the first field carries the UHR-STF, the UHR-STF in the first field may be an R-UHR-STF.

In this implementation, the first field may carry a long training field or a short training field, so that when the first STA completes adjustment of the OM parameter before an end moment of the first field, the first STA can adjust AGC or perform channel estimation based on the long training field or the short training field.

It may be understood that the foregoing several implementations of the first field may be applicable to the PPDU shown in any one of Example 1 to Example 9.

The following describes apparatuses provided in embodiments of this application.

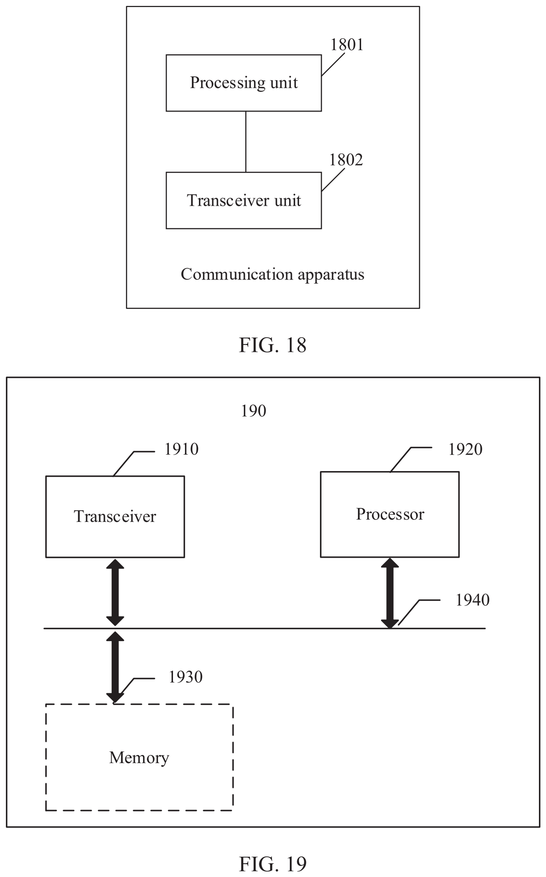

In this application, division into functional modules is performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely logical function division. During actual implementation, another division manner may be used. The following describes in detail communication apparatuses in embodiments of this application with reference to FIG. 18 to FIG. 20.

FIG. 18 is a diagram of a structure of a communication apparatus according to an embodiment of this application. As shown in FIG. 18, the communication apparatus includes a processing unit 1801 and a transceiver unit 1802. The transceiver unit 1802 may implement a corresponding communication function, and the processing unit 1801 is configured to perform data processing. For example, the transceiver unit 1802 may also be referred to as a communication interface, a communication unit, or the like.

In some embodiments of this application, the communication apparatus may be configured to perform an action performed by the AP in the foregoing method embodiments. In this case, the communication apparatus may be an AP or a component (for example, a chip or a system) that may be configured in the AP. The transceiver unit 1802 is configured to perform operations related to receiving and sending of the AP in the foregoing method embodiments, and the processing unit 1801 is configured to perform operations related to processing of the AP in the foregoing method embodiments.

For example, the processing unit 1801 is configured to generate a PPDU, and the transceiver unit 1802 is configured to send the PPDU.

Optionally, the transceiver unit 1802 is further configured to receive a BA frame.

It may be understood that for specific descriptions of the PPDU, the BA frame, and the like, refer to the foregoing method embodiments. Details are not described herein again.

In some other embodiments of this application, the communication apparatus may be configured to perform an action performed by the first STA in the foregoing method embodiments. In this case, the communication apparatus may be a first STA or a component (for example, a chip or a system) that may be configured in the first STA. The transceiver unit 1802 is configured to perform operations related to receiving and sending of the first STA in the foregoing method embodiments, and the processing unit 1801 is configured to perform operations related to processing of the first STA in the foregoing method embodiments.

For example, the transceiver unit 1802 is configured to receive a PPDU, and the processing unit 1801 is configured to adjust an OM parameter based on the PPDU.

Optionally, the transceiver unit 1802 is further configured to send a BA frame.

It may be understood that for specific descriptions of the PPDU, the OM parameter, the BA frame, and the like, refer to the foregoing method embodiments. Details are not described herein again.

Optionally, the communication apparatus may further include a storage unit. The storage unit may be configured to store instructions and/or data. The processing unit 1801 may read the instructions and/or the data in the storage unit, so that the communication apparatus implements the foregoing method embodiments.

It may be understood that the specific descriptions of the transceiver unit and the processing unit in embodiments of this application are merely examples. For specific functions, steps, or the like performed by the transceiver unit and the processing unit, refer to the foregoing method embodiments. Details are not described herein again.

The foregoing describes the communication apparatus in embodiments of this application. The following describes a possible product form of the communication apparatus. It should be understood that a product in any form that has a function of the communication apparatus in FIG. 18 falls within the protection scope of embodiments of this application. It should be further understood that the following descriptions are merely examples, and a product form of the communication apparatus in embodiments of this application is not limited thereto.

In a possible implementation, in the communication apparatus shown in FIG. 18, the processing unit 1801 may be one or more processors; and the transceiver unit 1802 may be a transceiver or the transceiver unit 1802 may be a sending unit and a receiving unit, the sending unit may be a transmitter, the receiving unit may be a receiver, and the sending unit and the receiving unit are integrated into one device, for example, a transceiver. In embodiments of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before processed information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is input into the processor.

As shown in FIG. 19, the communication apparatus 190 includes one or more processors 1920 and a transceiver 1910.

In some embodiments of this application, the communication apparatus may be configured to perform steps, functions, or the like performed by the AP in the foregoing method embodiments.

For example, the processor 1920 is configured to generate a PPDU, and the transceiver 1910 is configured to send the PPDU.

Optionally, the transceiver 1910 is further configured to receive a BA frame.

In some other embodiments of this application, the communication apparatus may be configured to perform steps, functions, or the like performed by the first STA in the foregoing method embodiments.

For example, the transceiver 1910 is configured to receive a PPDU, and the processor 1920 is configured to adjust an OM parameter based on the PPDU.

Optionally, the transceiver 1910 is further configured to send a BA frame.

It may be understood that the specific descriptions of the transceiver and the processor in embodiments of this application are merely examples. For specific functions, steps, or the like performed by the transceiver and the processor, refer to the foregoing method embodiments. Details are not described herein again.

In the foregoing embodiments, for descriptions of the PPDU, the BA frame, the OM parameter, and the like, refer to descriptions in the foregoing method embodiments. Details are not described herein again.

In various implementations of the communication apparatus shown in FIG. 19, the transceiver may include a receiver and a transmitter, the receiver is configured to perform the receiving function (or operation), and the transmitter is configured to perform the transmitting function (or operation). The transceiver is configured to communicate with another device/apparatus through a transmission medium.

Optionally, the communication apparatus 190 may further include one or more memories 1930, configured to store program instructions, data, and/or the like. The memory 1930 is coupled to the processor 1920. The coupling in embodiments of this application is an indirect coupling or a communication connection between apparatuses, units, or modules, or may be in an electrical form, a mechanical form, or another form, and is used for information exchange between the apparatuses, the units, or the modules. The processor 1920 may cooperate with the memory 1930. The processor 1920 may execute the program instructions stored in the memory 1930. Optionally, at least one of the one or more memories may be included in the processor.

In embodiments of this application, a specific connection medium between the transceiver 1910, the processor 1920, and the memory 1930 is not limited. In embodiments of this application, in FIG. 19, the memory 1930, the processor 1920, and the transceiver 1910 are connected to each other through a bus 1940. The bus is represented by using a thick line in FIG. 19. A manner of a connection between other components is only schematically described, but is not used as a limitation. The bus may be classified into an address bus, a data bus, a control bus, and the like. For ease of representation, the bus is represented only by one thick line in FIG. 19. However, this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1920 is mainly configured to: process a communication protocol and communication data, control the entire communication apparatus, execute a software program, and process data of the software program. The memory 1930 is mainly configured to store a software program and data. The transceiver 1910 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1920 may read the software program in the memory 1930, explain and execute instructions of the software program, and process data of the software program. When data needs to be sent in a wireless manner, after performing baseband processing on the to-be-sent data, the processor 1920 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1920. The processor 1920 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus described in embodiments of this application may alternatively have more components and the like than those in FIG. 19. This is not limited in embodiments of this application. The methods performed by the processor and the transceiver are merely examples. For specific steps performed by the processor and the transceiver, refer to the methods described above.

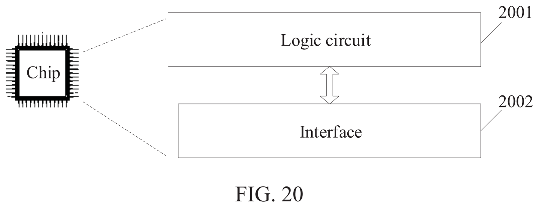

In another possible implementation, in the communication apparatus shown in FIG. 18, the processing unit 1801 may be one or more logic circuits, and the transceiver unit 1802 may be an input/output interface, or referred to as a communication interface, an interface circuit, an interface, or the like. Alternatively, the transceiver unit 1802 may be a sending unit and a receiving unit. The sending unit may be an output interface, and the receiving unit may be an input interface. The sending unit and the receiving unit are integrated into one unit, for example, an input/output interface. As shown in FIG. 20, the communication apparatus shown in FIG. 20 includes a logic circuit 2001 and an interface 2002. That is, the processing unit 1801 may be implemented through the logic circuit 2001, and the transceiver unit 1802 may be implemented through the interface 2002. The logic circuit 2001 may be a chip, a processing circuit, an integrated circuit, a system on chip (system on chip, SoC) chip, or the like. The interface 2002 may be a communication interface, an input/output interface, a pin, or the like. For example, FIG. 20 is an example in which the communication apparatus is a chip. The chip includes the logic circuit 2001 and the interface 2002.

In embodiments of this application, the logic circuit and the interface may be coupled to each other. A specific manner of a connection between the logic circuit and the interface is not limited in embodiments of this application.

In some embodiments of this application, the communication apparatus may be configured to perform steps, functions, or the like performed by the AP in the foregoing method embodiments. For example, the logic circuit 2001 is configured to generate a PPDU, and the interface 2002 is configured to output the PPDU. Optionally, the interface 2002 is further configured to input a BA frame.

In some other embodiments of this application, the communication apparatus may be configured to perform steps, functions, or the like performed by the first STA in the foregoing method embodiments. For example, the interface 2002 is configured to input a PPDU, and the logic circuit 2001 is configured to adjust an OM parameter based on the PPDU.

Optionally, the interface 2002 is further configured to output the BA frame.

It may be understood that specific descriptions of the logic circuit and the interface in embodiments of this application are merely examples. For specific functions, steps, or the like performed by the logic circuit and the interface, refer to the foregoing method embodiments. Details are not described herein again.

In the foregoing embodiments, for descriptions of the PPDU, the OM parameter, the BA frame, and the like, refer to descriptions in the foregoing method embodiments. Details are not described herein again.

It may be understood that the communication apparatus shown in embodiments of this application may implement the method provided in embodiments of this application in a form of hardware or in a form of software. This is not limited in embodiments of this application.

An embodiment of this application further provides a communication system. The communication system includes a first communication apparatus and a second communication apparatus. The first communication apparatus and the second communication apparatus are configured to perform the method in any one of the foregoing embodiments. For example, the first communication apparatus is configured to perform steps, functions, or the like performed by the AP in the foregoing method embodiments, and the second communication apparatus is configured to perform steps, functions, or the like performed by the first STA in the foregoing method embodiments.

In addition, this application further provides a computer program. The computer program is used to implement operations and/or processing performed by the AP in the method provided in this application.

This application further provides a computer program. The computer program is used to implement operations and/or processing performed by the first STA in the method provided in this application.

This application further provides a computer-readable storage medium. The computer-readable storage medium stores computer code. When the computer code is run on a computer, the computer is enabled to perform operations and/or processing performed by the AP in the method provided in this application.

This application further provides a computer-readable storage medium. The computer-readable storage medium stores computer code. When the computer code is run on a computer, the computer is enabled to perform operations and/or processing performed by the first STA in the method provided in this application.

This application further provides a computer program product. The computer program product includes computer code or a computer program. When the computer code or the computer program runs on a computer, operations and/or processing performed by the AP in the method provided in this application are/is performed.

This application further provides a computer program product. The computer program product includes computer code or a computer program. When the computer code or the computer program runs on a computer, operations and/or processing performed by the first STA in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating a physical layer protocol data unit PPDU, wherein the PPDU comprises a first field, and duration of the first field is determined by duration in which a first STA adjusts an operating mode OM parameter; and
sending the PPDU, wherein the first field is carried on a first resource unit RU, and the first RU is comprised in an RU corresponding to the first STA.

2. A communication method, comprising:
receiving a physical layer protocol data unit PPDU, wherein the PPDU comprises a first field, duration of the first field is determined by duration in which a first STA adjusts an operating mode OM parameter, the first field is carried on a first resource unit RU, and the first RU is comprised in an RU corresponding to the first STA; and
adjusting the OM parameter based on the PPDU.

3. The method according to claim 1 or 2, wherein the PPDU further comprises a first signaling SIG field and a first data field, the first field is located between the first SIG field and the first data field, and the first data field is carried on the first RU.

4. The method according to any one of claims 1 to 3, wherein the PPDU further comprises a second field, the second field is located after the first field, and the second field comprises a short training field.

5. The method according to claim 4, wherein the second field is transmitted by an RU corresponding to at least one STA, and the at least one STA comprises the first STA.

6. The method according to any one of claims 1 to 5, wherein the PPDU further comprises a third field, the third field is located after the first field, and the third field is used by the first STA for performing channel estimation after adjusting the OM parameter.

7. The method according to claim 6, wherein the third field is transmitted by the RU corresponding to the at least one STA, and the at least one STA comprises the first STA.

8. The method according to any one of claims 1 to 7, wherein the first field is carried on the RU corresponding to the first STA and an RU corresponding to a second STA, and the duration of the first field is determined by the duration in which the first STA adjusts the OM parameter and duration in which the second STA adjusts the OM parameter.

9. The method according to claim 8, wherein the PPDU further comprises a fourth field, duration of the fourth field is determined by the duration of the first field and the duration in which the second STA adjusts the OM parameter, the fourth field is located after the first field, and the fourth field is carried on the RU corresponding to the second STA.

10. The method according to claim 9, wherein the PPDU further comprises a fifth field and/or a sixth field, the fifth field or the sixth field is after the fourth field, the fifth field comprises a short training field, and the sixth field comprises a long training field.

11. The method according to any one of claims 3 to 10, wherein the first signaling SIG field comprises at least one of the following: a start location of the first field, a start location of the second field, a start location of the third field, a length of the first field, a length of the second field, and a length of the third field.

12. The method according to any one of claims 1 to 11, wherein the first field is used to carry data of another STA that is not the first STA.

13. The method according to any one of claims 1 to 11, wherein the first field is used to carry first data of the first STA, and an OM parameter corresponding to the first data carried in the first field comprises the OM parameter before being adjusted by the first STA.

14. The method according to claim 13, wherein the first data field in the PPDU is used to carry the first data, the first data field is located after the first field, and the OM parameter corresponding to the first data carried in the first data field comprises the OM parameter after being adjusted by the first STA.

15. The method according to any one of claims 1 to 11, wherein the first field comprises at least one of the following: a random sequence, a legacy-short training field L-STF, a legacy-long training field L-LTF, an ultra high reliability short training field UHR-STF, and an ultra high reliability long training field UHR-LTF.

16. The method according to any one of claims 1 to 15, wherein the PPDU further comprises first indication information, and the first indication information indicates the first STA to adjust the OM parameter.

17. The method according to any one of claims 1 to 16, wherein the method further comprises:
receiving a block acknowledgment BA frame, wherein the BA frame comprises second indication information, and the second indication information indicates the duration in which the first STA adjusts the OM parameter.

18. The method according to any one of claims 1 to 17, wherein the OM parameter comprises at least one of the following: a modulation and coding scheme MCS, a number of spatial streams NSS, a bandwidth, a transmit power, and a receive frequency.

19. The method according to claim 2, wherein adjusting the OM parameter based on the PPDU comprises:
when the first SIG field in the PPDU comprises a user field corresponding to the first STA, or an OM parameter indicated by the PPDU is different from a current OM parameter of the first STA, or OM parameter adjustment indication information is received, adjusting the OM parameter based on the PPDU.

20. The method according to claim 19, wherein a start moment at which the first STA adjusts the OM parameter comprises any one of the following: a moment at which the first STA completes detection of the user field that corresponds to the first STA and that is comprised in the first signaling SIG field, a moment at which the first STA completes detection of the first signaling SIG field, or a start moment of the first field.

21. A communication apparatus, comprising a unit configured to perform the method according to any one of claims 1 to 20.

22. A communication apparatus, comprising a processor and a memory, wherein
the memory is configured to store instructions; and
the processor is configured to execute the instructions, so that the method according to any one of claims 1 to 20 is performed.

23. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 20 is performed.

24. A computer-readable storage medium, wherein the computer-readable storage medium is configured to store a computer program; and when the computer program is executed, the method according to any one of claims 1 to 20 is performed.

25. A computer program, wherein when the computer program is executed, the method according to any one of claims 1 to 20 is performed.

26. A communication system, wherein the communication system comprises a first communication apparatus and a second communication apparatus, the first communication apparatus is configured to perform the method according to any one of claim 1 or claims 3 to 20, and the second communication apparatus is configured to perform the method according to any one of claims 2 to 20.
